# EUROPEAN PATENT APPLICATION

(11) **EP 4 319 446 A1**
(43) Date of publication of application: **07.02.2024**
(21) Application number: 22794870.0
(22) Date of filing: 25.04.2022
(51) Int. Cl.: H04W 74/08

(54) **BEACON FRAME TRANSMISSION METHOD IN EMLSR MODE, AND RELATED APPARATUS**

(30) Priority: 27.04.2021 CN 202110462339
(71) Applicant: Huawei Technologies Co., Ltd., Shenzhen, Guangdong 518129 (CN)
(72) Inventor: LI, Yiqing, Shenzhen, Guangdong 518129 (CN); GUO, Yuchen, Shenzhen, Guangdong 518129 (CN); LI, Yunbo, Shenzhen, Guangdong 518129 (CN); HUANG, Guogang, Shenzhen, Guangdong 518129 (CN); GAN, Ming, Shenzhen, Guangdong 518129 (CN)
(74) Representative: Pfenning, Meinig & Partner mbB
(86) International application number: PCT/CN2022/089064
(87) International publication number: WO 2022/228400

(57) **Abstract**

This application relates to the field of wireless communication, in particular, to a beacon frame transmission method in an EMLSR mode, and is applied to a wireless local area network supporting the 802.11be standard. The method includes: A TXOP holder sends a first frame before a first delay prior to a next TBTT, where the first frame indicate TXOP termination on a first link, and the first delay is used by an EMLSR non-AP MLD to change a spatial stream on a second link to a state supporting beacon frame reception on the second link; and the non-AP MLD changes, within the first delay after the TXOP termination on the first link, a spatial stream on the second link to supporting successful beacon frame reception on the second link, and receives a beacon frame by using a spatial stream currently supported on the second link at the next TBTT. According to embodiments of this application, a non-AP MLD in an EMLSR mode can be prevented from missing an important beacon frame.

## Description

This application claims priority to Chinese Patent Application No. 202110462339.3, filed with the China National Intellectual Property Administration on April 27, 2021 and entitled "BEACON FRAME TRANSMISSION METHOD IN EMLSR MODE AND RELATED APPARATUS", which is incorporated herein by reference in its entirety.

### TECHNICAL FIELD

This application relates to the field of wireless communication technologies, and in particular, to a beacon frame transmission method in an enhanced multi-link single radio (Enhanced Multi-Link Single Radio, EMLSR) mode and a related apparatus.

### BACKGROUND

A continuous technical goal of development and evolution of a wireless local area network (wireless local area network, WLAN) or a cellular network is to continuously improve a throughput. WLAN system protocols are mainly discussed by standard groups of the institute of electrical and electronics engineers (IEEE, Institute of Electrical and Electronics Engineers). In the standards such as IEEE 802.11a/b/g/n/ac/ax, the throughput is continuously improved. The next-generation Wi-Fi standard IEEE 802.11be is referred to as extremely high throughput (extremely high throughput, EHT) or Wi-Fi 7. A key technology of the standard is to improve a throughput by using multi-link (multi-link, ML) communication. A core idea of multi-link communication is that a WLAN device that supports the next-generation IEEE 802.11 standard, that is, an EHT device, has multi-band (multi-band) transmitting and receiving capabilities, and therefore uses a larger bandwidth for data transmission, to significantly increase the throughput. The multiple bands include but are not limited to 2.4, 5 GHz, and 6 GHz Wi-Fi bands. A frequency band is referred to as a link, and a plurality of frequency bands are referred to as a plurality of links. In 802.11be, a WLAN device that supports multi-link communication is referred to as a multi-link device (multi link device, MLD). Apparently, the multi-link device may perform parallel communication on a plurality of links (or a plurality of frequency bands), so that a transmission rate is greatly improved. The multi-link device (MLD) includes one or more affiliated stations (affiliated STA). The affiliated station is a logical station and may work on a link. The affiliated station may be an access point (access point, AP) or a non-access point station (non-access point station, non-AP STA). In the 802. 1 The standard, a multi-link device whose affiliated station is an AP is referred to as an AP MLD, and a multi-link device whose affiliated station is a non-AP STA is referred to as a non-AP MLD.

However, there may be a station (station, STA) whose receiving capability is limited in some cases. Therefore, it is considered to introduce an enhanced multi-link single radio (enhanced Multi-Link single radio, EMLSR) mode, which is mainly applied to a non-AP MLD. In this mode, a non-AP MLD can only perform a listening operation (listening operation) on a channel and receive, from an AP MLD, an initial control frame of an orthogonal frequency division multiplexing (orthogonal frequency division multiplexing, OFDM) physical layer protocol data unit (physical layer protocol data unit, PPDU) type and a non-high throughput (high throughput, HT) duplicate (non-HT duplicate) PPDU type, and reception of frames of other types is currently not supported. The listening operation is defined as a clear channel assessment (clear channel assessment, CCA).

A beacon frame is not an initial control frame, and the beacon frame includes some important information, such as a critical update (Critical Update). Therefore, for a non-AP MLD, it is recommended that no beacon frame is missed. Therefore, how a non-AP MLD in an EMLSR mode receives a beacon frame in a listening operation becomes an urgent problem to be resolved.

### SUMMARY

Embodiments of this application provide a beacon frame transmission method in an EMLSR mode and a related apparatus, to prevent a non-AP MLD in the EMLSR mode from missing an important beacon frame.

The following describes this application from different aspects. It should be understood that mutual reference may be made to the following implementations and beneficial effects of the different aspects.

According to a first aspect, this application provides a beacon frame transmission method in an EMLSR mode, and the method includes: A first link and a second link exist between a TXOP holder AP MLD and an EMLSR non-AP MLD, and the AP MLD is to send a beacon frame on the second link at a next TBTT; the AP MLD sends a first frame before a first delay prior to the next TBTT, where the first frame indicates TXOP termination on the first link; and the AP MLD sends a beacon frame on the second link at the next TBTT. The first delay is used by the EMLSR non-AP MLD to change a spatial stream on the second link to supporting beacon frame reception. With reference to the first aspect, in a possible implementation, the first delay is one of the following: The first delay is a period of time taken by the non-AP MLD to change a spatial stream supported on the second link from a single spatial stream to multiple spatial streams; or the first delay is a period of time taken by the non-AP MLD to change from supporting no spatial stream on the second link to supporting a single spatial stream or multiple spatial streams.

In this specification, "supporting no spatial stream on the second link" may be understood as that no receive antenna in the non-AP MLD works on the second link, and therefore there is no spatial stream on the second link.

With reference to the first aspect, in a possible implementation, the method further includes: The AP MLD receives a second frame, where the second frame includes indication information, and the indication information indicates an identifier of a link on which a receiving capability is not limited when the non-AP MLD performs reception by using a single spatial stream.

Optionally, the indication information is located in a common information field of a multi-link element of the second frame, and a length of the indication information is 4 bits. Optionally, the indication information is located in an enhanced multi-link capabilities field of the common information field.

With reference to the first aspect, in a possible implementation, the method further includes: The AP MLD receives a second frame, where the second frame includes indication information, and the indication information is carried in link information of a link, to indicate whether a receiving capability on the link is limited when a single spatial stream is used for reception.

Optionally, the indication information is located in an extremely high throughput medium access control capabilities information field of the second frame, and a length of the indication information is 1 bit.

Optionally, the indication information is located in a per-station STA profile of a multi-link element of the second frame, and a length of the indication information is 1 bit. Optionally, the indication information is located in a STA control field of the per-station STA profile.

It should be understood that, because the AP MLD is a TXOP holder, before the AP MLD sends the first frame, the first delay may need to be determined based on a receiving capability on each link when the non-AP MLD performs reception by using a single spatial stream. It can be learned that in this solution, a non-AP MLD actively reports a link capability of the non-AP MLD. When an AP MLD serves as a TXOP holder, beacon frame transmission between the AP MLD and the EMLSR non-AP MLD can be supported. In addition, when communicating with the EMLSR non-AP MLD, the AP MLD may not send an initial control frame on a link on which a receiving capability is not limited, reducing overheads of some initial control frames.

With reference to the first aspect, in a possible implementation, a link on which a receiving capability is not limited when the non-AP MLD performs reception by using a single spatial stream is a link on which an association request frame and an association response frame are exchanged between the AP MLD and the non-AP MLD in an association process, or a link on which a reassociation request frame and a reassociation response frame are exchanged between the AP MLD and the non-AP MLD in a reassociation process.

In this solution, a link on which a receiving capability is not limited when a non-AP MLD performs reception by using a single spatial stream is agreed on. When an AP MLD serves as a TXOP holder, beacon frame transmission between the AP MLD and the EMLSR non-AP MLD can be supported. In addition, when communicating with the EMLSR non-AP MLD, the AP MLD may not send an initial control frame on a link on which a receiving capability is not limited, reducing overheads of some initial control frames.

According to a second aspect, this application provides a beacon frame transmission method in an EMLSR mode, and the method includes: A first link and a second link exist between an EMLSR non-AP MLD and a TXOP holder AP MLD; the non-AP MLD receives a first frame before a first delay prior to a next TBTT, where the first frame indicates TXOP termination on the first link; the non-AP MLD changes, within the first delay after the TXOP termination on the first link, a spatial stream on the second link to supporting beacon frame reception; and the non-AP MLD receives a beacon frame by using a spatial stream currently supported on the second link at the next TBTT. The first delay is used by the non-AP MLD to change a spatial stream on the second link to supporting beacon frame reception.

It can be learned that in this solution, when a non-AP MLD performs reception by using a single spatial stream, impact of an EMLSR switching delay on beacon frame reception is separately considered, and a TXOP holder is restricted to terminate a TXOP before an EMLSR switching delay (that is, the first delay) prior to a next TBTT, to ensure that the non-AP MLD has sufficient time to complete changing a spatial stream on the second link. This can prevent the non-AP MLD in the EMLSR mode from missing an important beacon frame.

The beacon frame includes some important information, for example, a critical update (Critical Update), which includes a TBTT information update. If the non-AP MLD misses the beacon frame, and performs reception based on an original (or an old) TBTT, a new beacon frame is missed. In addition, for a delivery traffic indication information (delivery traffic indication message, DTIM) beacon frame, if the non-AP MLD misses the DTIM beacon frame, the non-AP MLD may miss a downlink data packet transmission opportunity. Therefore, for a non-AP MLD, it is recommended that no beacon frame is missed.

With reference to the second aspect, in a possible implementation, the first delay is one of the following: The first delay is a period of time taken by the non-AP MLD to change a spatial stream supported on the second link from a single spatial stream to multiple spatial streams; or the first delay is a period of time taken by the non-AP MLD to change from supporting no spatial stream on the second link to supporting a single spatial stream or multiple spatial streams.

With reference to the second aspect, in a possible implementation, receiving capabilities are limited when the non-AP MLD performs reception on the first link and the second link by using a single spatial stream. A spatial stream supported on the first link within the TXOP is multiple spatial streams, but no spatial stream is supported on the second link within the TXOP. That the non-AP MLD changes, within the first delay after the TXOP termination on the first link, a spatial stream on the second link to supporting beacon frame reception includes: The non-AP MLD changes, within the first delay after the TXOP termination on the first link, from supporting no spatial stream on the second link to supporting multiple spatial streams.

The "changing from supporting no spatial stream on the second link to supporting multiple spatial streams" mentioned in this specification may be understood as changing from no receive antenna working on the second link to multiple receive antennas working on the second link simultaneously. In other words, no receive antenna in the non-AP MLD works on the second link within the TXOP, and a plurality of receive antennas are switched to work on the second link after the TXOP termination, increasing a quantity of spatial streams supported on the second link.

It may be learned that in this solution, for a case in which receiving capabilities on links are all limited when the non-AP MLD performs reception by using a single spatial stream, a switching solution is provided, to ensure that the non-AP MLD can successfully receive a beacon frame at the next TBTT.

It should be understood that "a receiving capability is limited" mentioned in this specification means that only PPDUs of some types (for example, an OFDM type and a non-HT duplicate type) can be received. Correspondingly, "a receiving capability is not limited" mentioned in this specification means that PPDUs of all types can be received.

With reference to the second aspect, in a possible implementation, the non-AP MLD includes a first spatial stream and a second spatial stream. A receiving capability is limited when the non-AP MLD performs reception on a link by using the first spatial stream, and a receiving capability is not limited when the non-AP MLD performs reception on a link by using the second spatial stream. With reference to the second aspect, in a possible implementation, a spatial stream supported on the first link within the TXOP is multiple spatial streams, including a first spatial stream and a second spatial stream. However, no spatial stream is supported on the second link of the non-AP MLD within the TXOP. A receiving capability is not limited when the non-AP MLD performs reception on the second link by using a single spatial stream. That the non-AP MLD changes, within the first delay after the TXOP termination on the first link, a spatial stream on the second link to supporting beacon frame reception includes: The non-AP MLD changes, within the first delay after the TXOP termination on the first link, from supporting no spatial stream on the second link to supporting a single spatial stream. The single spatial stream supported on the second link supports beacon frame reception. Herein, the second spatial stream supported on the first link within the TXOP may be switched back to the second link.

It can be learned that, this solution provides a spatial stream switching solution for a case in which no spatial stream is supported on the second link and a receiving capability is not limited when a single spatial stream is used for reception on the second link, to ensure that the non-AP MLD can successfully receive a beacon frame at the next TBTT.

With reference to the second aspect, in a possible implementation, a spatial stream supported on the first link within the TXOP is multiple spatial streams, including a first spatial stream and a second spatial stream. However, no spatial stream is supported on the second link of the non-AP MLD within the TXOP, and a receiving capability is limited when the non-AP MLD performs reception on the second link by using a single spatial stream. That the non-AP MLD changes, within the first delay after the TXOP termination on the first link, a spatial stream on the second link to supporting beacon frame reception includes: The non-AP MLD changes, within the first delay after the TXOP termination on the first link, from supporting no spatial stream on the second link to supporting a single spatial stream. The single spatial stream supported on the second link supports beacon frame reception. Herein, the second spatial stream supported on the first link may be switched to the second link.

It can be learned that, this solution provides a spatial stream switching solution for a case in which no spatial stream is supported on the second link and a receiving capability is limited when a single spatial stream is used for reception on the second link, to ensure that the non-AP MLD can successfully receive a beacon frame at the next TBTT.

With reference to the second aspect, in a possible implementation, a spatial stream supported on the second link of the non-AP MLD within the TXOP is a single spatial stream, but a receiving capability is limited when the non-AP MLD performs reception on the second link by using the single spatial stream. That the non-AP MLD changes, within the first delay after the TXOP termination on the first link, a spatial stream on the second link to supporting beacon frame reception includes: The non-AP MLD changes, within the first delay after the TXOP termination on the first link, a spatial stream supported on the second link from a single spatial stream to multiple spatial streams.

It can be learned that, this solution provides a spatial stream switching solution for a case in which a single spatial stream is originally supported on the second link within a TXOP but a receiving capability is limited when the single spatial stream is used for reception on the second link, to ensure that the non-AP MLD can successfully receive a beacon frame at the next TBTT.

With reference to the second aspect, in a possible implementation, the method further includes: The non-AP MLD sends a second frame, where the second frame includes indication information, and the indication information indicates an identifier of a link on which a receiving capability is not limited when the non-AP MLD performs reception by using a single spatial stream. Optionally, the indication information is located in a common information field of a multi-link element of the second frame, and a length of the indication information is 4 bits. Optionally, the indication information is located in an enhanced multi-link capabilities field of the common information field.

With reference to the second aspect, in a possible implementation, the method further includes: The non-AP MLD sends a second frame, where the second frame includes indication information, and the indication information is carried in link information of a link, to indicate whether a receiving capability on the link is limited when a single spatial stream is used for reception. Optionally, the indication information is located in an extremely high throughput EHT medium access control MAC capabilities information field of the second frame, and a length of the indication information is 1 bit.

Optionally, the indication information is located in a per-station STA profile of a multi-link element of the second frame, and a length of the indication information is 1 bit. Optionally, the indication information is located in a STA control field of the per-station STA profile.

With reference to the second aspect, in a possible implementation, a link on which a receiving capability is not limited when the non-AP MLD performs reception by using a single spatial stream is a link on which an association request frame and an association response frame are exchanged between the AP MLD and the non-AP MLD in an association process, or a link on which a reassociation request frame and a reassociation response frame are exchanged between the AP MLD and the non-AP MLD in a reassociation process.

According to a third aspect, this application provides a communication apparatus. The communication apparatus may be an AP MLD or a chip in an AP MLD, for example, a Wi-Fi chip. The communication apparatus includes a transceiver unit, configured to send a first frame before a first delay prior to a next TBTT, where the first frame indicates TXOP termination on a first link, and the first delay is used by a non-AP MLD to change a spatial stream on a second link to supporting beacon frame reception. The transceiver unit is further configured to send a beacon frame on the second link at the next TBTT. A first link and a second link exist between a TXOP holder AP MLD and an EMLSR non-AP MLD, and the AP MLD is to send a beacon frame on the second link at a next TBTT. Optionally, the communication apparatus further includes a processing unit, configured to generate a first frame and a beacon frame.

With reference to the third aspect, in a possible implementation, the first delay is one of the following: The first delay is a period of time taken by the non-AP MLD to change a spatial stream supported on the second link from a single spatial stream to multiple spatial streams; or the first delay is a period of time taken by the non-AP MLD to change from supporting no spatial stream on the second link to supporting a single spatial stream or multiple spatial streams.

With reference to the third aspect, in a possible implementation, the transceiver unit is configured to receive a second frame, where the second frame includes indication information, and the indication information indicates an identifier of a link on which a receiving capability is not limited when the non-AP MLD performs reception by using a single spatial stream.

Optionally, the indication information is located in a common information field of a multi-link element of the second frame, and a length of the indication information is 4 bits. Optionally, the indication information is located in an enhanced multi-link capabilities field of the common information field.

With reference to the third aspect, in a possible implementation, the transceiver unit is configured to receive a second frame, where the second frame includes indication information, and the indication information is carried in link information of a link, to indicate whether a receiving capability on the link is limited when a single spatial stream is used for reception.

Optionally, the indication information is located in an extremely high throughput medium access control capabilities information field of the second frame, and a length of the indication information is 1 bit.

Optionally, the indication information is located in a per-station STA profile of a multi-link element of the second frame, and a length of the indication information is 1 bit. Optionally, the indication information is located in a STA control field of the per-station STA profile.

With reference to the third aspect, in a possible implementation, a link on which a receiving capability is not limited when the non-AP MLD performs reception by using a single spatial stream is a link on which an association request frame and an association response frame are exchanged between the communication apparatus and the non-AP MLD in an association process, or a link on which a reassociation request frame and a reassociation response frame are exchanged between the communication apparatus and the non-AP MLD in a reassociation process.

According to a fourth aspect, this application provides a communication apparatus. The communication apparatus may be a non-AP MLD or a chip in a non-AP MLD, for example, a Wi-Fi chip. The communication apparatus includes: a transceiver unit, configured to receive a first frame before a first delay prior to a next TBTT, where the first frame indicates TXOP termination on a first link, and the first delay is used by the non-AP MLD to change a spatial stream on a second link to supporting beacon frame reception; and a processing unit, configured to change, within the first delay after the TXOP termination on the first link, a spatial stream on the second link to supporting beacon frame reception. The transceiver unit is further configured to receive a beacon frame by using a spatial stream currently supported on the second link at the next TBTT. A first link and a second link exist between the communication apparatus and a TXOP holder AP MLD.

With reference to the fourth aspect, in a possible implementation, the first delay is one of the following: The first delay is a period of time taken by the non-AP MLD to change a spatial stream supported on the second link from a single spatial stream to multiple spatial streams; or the first delay is a period of time taken by the non-AP MLD to change from supporting no spatial stream on the second link to supporting a single spatial stream or multiple spatial streams.

With reference to the fourth aspect, in a possible implementation, receiving capabilities are limited when the non-AP MLD performs reception on the first link and the second link by using a single spatial stream. A spatial stream supported on the first link within the TXOP is multiple spatial streams, but no spatial stream is supported on the second link of the non-AP MLD within the TXOP. The processing unit is specifically configured to change, within the first delay after the TXOP termination on the first link, from supporting no spatial stream on the second link to supporting multiple spatial streams.

With reference to the fourth aspect, in a possible implementation, the non-AP MLD includes a first spatial stream and a second spatial stream. A receiving capability is limited when the non-AP MLD performs reception on a link by using the first spatial stream, and a receiving capability is not limited when the non-AP MLD performs reception on a link by using the second spatial stream. With reference to the fourth aspect, in a possible implementation, a spatial stream supported on the first link within the TXOP is multiple spatial streams, including a first spatial stream and a second spatial stream. However, no spatial stream is supported on the second link of the non-AP MLD within the TXOP. A receiving capability is not limited when the non-AP MLD performs reception on the second link by using a single spatial stream. The processing unit is specifically configured to change, within the first delay after the TXOP termination on the first link, from supporting no spatial stream on the second link to supporting a single spatial stream. The single spatial stream supported on the second link supports beacon frame reception. Herein, the second spatial stream supported on the first link within the TXOP may be switched back to the second link.

With reference to the fourth aspect, in a possible implementation, a spatial stream supported on the first link within the TXOP is multiple spatial streams, including a first spatial stream and a second spatial stream. However, no spatial stream is supported on the second link of the non-AP MLD within the TXOP, and a receiving capability is limited when the non-AP MLD performs reception on the second link by using a single spatial stream. The processing unit is specifically configured to change, within the first delay after the TXOP termination on the first link, from supporting no spatial stream on the second link to supporting a single spatial stream. The single spatial stream supported on the second link supports beacon frame reception. Herein, the second spatial stream supported on the first link may be switched to the second link.

With reference to the fourth aspect, in a possible implementation, a spatial stream supported on the second link of the non-AP MLD within the TXOP is a single spatial stream, but a receiving capability is limited when the non-AP MLD performs reception on the second link by using the single spatial stream. The processing unit is specifically configured to change, within the first delay after the TXOP termination on the first link, the spatial stream supported on the second link from a single spatial stream to multiple spatial streams.

With reference to the fourth aspect, in a possible implementation, the transceiver unit is further configured to send a second frame, where the second frame includes indication information, and the indication information indicates an identifier of a link on which a receiving capability is not limited when the non-AP MLD performs reception by using a single spatial stream.

Optionally, the indication information is located in a common information field of a multi-link element of the second frame, and a length of the indication information is 4 bits. Optionally, the indication information is located in an enhanced multi-link capabilities field of the common information field.

With reference to the fourth aspect, in a possible implementation, the transceiver unit is configured to send a second frame, where the second frame includes indication information, and the indication information is carried in link information of a link, to indicate whether a receiving capability on the link is limited when a single spatial stream is used for reception.

Optionally, the indication information is located in an extremely high throughput medium access control capabilities information field of the second frame, and a length of the indication information is 1 bit.

Optionally, the indication information is located in a per-station STA profile of a multi-link element of the second frame, and a length of the indication information is 1 bit. Optionally, the indication information is located in a STA control field of the per-station STA profile.

With reference to the fourth aspect, in a possible implementation, a link on which a receiving capability is not limited when the non-AP MLD performs reception by using a single spatial stream is a link on which an association request frame and an association response frame are exchanged between the AP MLD and the non-AP MLD in an association process, or a link on which a reassociation request frame and a reassociation response frame are exchanged between the AP MLD and the non-AP MLD in a reassociation process.

According to a fifth aspect, this application provides a beacon frame transmission method in an EMLSR mode, and the method includes: A first link and a second link exist between a TXOP holder non-AP MLD and an AP MLD; the non-AP MLD sends a first frame before a first delay prior to a next TBTT, where the first frame indicates TXOP termination on the first link; the non-AP MLD changes, within the first delay after the TXOP termination on the first link, a spatial stream on the second link to supporting beacon frame reception; and the non-AP MLD receives a beacon frame by using a spatial stream currently supported on the second link at the next TBTT. The first delay is used by the non-AP MLD to change a spatial stream on the second link to supporting beacon frame reception. The non-AP MLD is in an EMLSR mode.

It can be learned that in this solution, for a case in which a non-AP MLD serves as a TXOP holder, when the non-AP MLD performs reception by using a single spatial stream, impact of an EMLSR switching delay on beacon frame reception is separately considered, and the TXOP holder is restricted to terminate a TXOP before an EMLSR switching delay (that is, the first delay) prior to a next TBTT, to ensure that the non-AP MLD has sufficient time to complete switching a spatial stream on the second link. This can prevent the non-AP MLD in the EMLSR mode from missing an important beacon frame.

With reference to the fifth aspect, in a possible implementation, the first delay is one of the following: The first delay is a period of time taken by the non-AP MLD to change a spatial stream supported on the second link from a single spatial stream to multiple spatial streams; or the first delay is a period of time taken by the non-AP MLD to change from supporting no spatial stream on the second link to supporting a single spatial stream or multiple spatial streams.

With reference to the fifth aspect, in a possible implementation, receiving capabilities are limited when the non-AP MLD performs reception on the first link and the second link by using a single spatial stream. A spatial stream supported on the first link within the TXOP is multiple spatial streams, but no spatial stream is supported on the second link within the TXOP. That the non-AP MLD changes, within the first delay after the TXOP termination on the first link, a spatial stream on the second link to supporting beacon frame reception includes: The non-AP MLD changes, within the first delay after the TXOP termination on the first link, from supporting no spatial stream on the second link to supporting multiple spatial streams.

With reference to the fifth aspect, in a possible implementation, the non-AP MLD includes a first spatial stream and a second spatial stream. A receiving capability is limited when the non-AP MLD performs reception on a link by using the first spatial stream, and a receiving capability is not limited when the non-AP MLD performs reception on a link by using the second spatial stream. With reference to the fifth aspect, in a possible implementation, a spatial stream supported on the first link within the TXOP is multiple spatial streams, including a first spatial stream and a second spatial stream. However, no spatial stream is supported on the second link of the non-AP MLD within the TXOP. A receiving capability is not limited when the non-AP MLD performs reception on the second link by using a single spatial stream. That the non-AP MLD changes, within the first delay after the TXOP termination on the first link, a spatial stream on the second link to supporting beacon frame reception includes: The non-AP MLD changes, within the first delay after the TXOP termination on the first link, from supporting no spatial stream on the second link to supporting a single spatial stream. The single spatial stream supported on the second link supports beacon frame reception. Herein, the second spatial stream supported on the first link within the TXOP may be switched back to the second link.

With reference to the fifth aspect, in a possible implementation, a spatial stream supported on the first link within the TXOP is multiple spatial streams, including a first spatial stream and a second spatial stream. However, no spatial stream is supported on the second link of the non-AP MLD within the TXOP, and a receiving capability is limited when the non-AP MLD performs reception on the second link by using a single spatial stream. That the non-AP MLD changes, within the first delay after the TXOP termination on the first link, a spatial stream on the second link to supporting beacon frame reception includes: The non-AP MLD changes, within the first delay after the TXOP termination on the first link, from supporting no spatial stream on the second link to supporting a single spatial stream. The single spatial stream supported on the second link supports beacon frame reception. Herein, the second spatial stream supported on the first link may be switched to the second link.

With reference to the fifth aspect, in a possible implementation, a spatial stream supported on the second link of the non-AP MLD within the TXOP is a single spatial stream, but a receiving capability is limited when the non-AP MLD performs reception on the second link by using the single spatial stream. That the non-AP MLD changes, within the first delay after the TXOP termination on the first link, a spatial stream on the second link to supporting beacon frame reception includes: The non-AP MLD changes, within the first delay after the TXOP termination on the first link, a spatial stream supported on the second link from a single spatial stream to multiple spatial streams.

With reference to the fifth aspect, in a possible implementation, a link on which a receiving capability is not limited when the non-AP MLD performs reception by using a single spatial stream is a link on which an association request frame and an association response frame are exchanged between the AP MLD and the non-AP MLD in an association process, or a link on which a reassociation request frame and a reassociation response frame are exchanged between the AP MLD and the non-AP MLD in a reassociation process.

According to a sixth aspect, this application provides a beacon frame transmission method in an EMLSR mode, and the method includes: A first link and a second link exist between an AP MLD and a TXOP holder non-AP MLD; the AP MLD receives a first frame before a first delay prior to a next TBTT, where the first frame indicates TXOP termination on the first link; and the AP MLD sends a beacon frame on the second link at the next TBTT. The first delay is used by the EMLSR non-AP MLD to change a spatial stream on the second link to supporting beacon frame reception. With reference to the sixth aspect, in a possible implementation, the first delay is one of the following: The first delay is a period of time taken by the non-AP MLD to change a spatial stream supported on the second link from a single spatial stream to multiple spatial streams; or the first delay is a period of time taken by the non-AP MLD to change from supporting no spatial stream on the second link to supporting a single spatial stream or multiple spatial streams.

With reference to the sixth aspect, in a possible implementation, a link on which a receiving capability is not limited when the non-AP MLD performs reception by using a single spatial stream is a link on which an association request frame and an association response frame are exchanged between the AP MLD and the non-AP MLD in an association process, or a link on which a reassociation request frame and a reassociation response frame are exchanged between the AP MLD and the non-AP MLD in a reassociation process.

According to a seventh aspect, this application provides a communication apparatus. The communication apparatus may be a non-AP MLD or a chip in a non-AP MLD, for example, a Wi-Fi chip. The communication apparatus includes: a transceiver unit, configured to send a first frame before a first delay prior to a next TBTT, where the first frame indicates TXOP termination on a first link, and the first delay is used by the non-AP MLD to change a spatial stream on a second link to supporting beacon frame reception; and a processing unit, configured to change, within the first delay after the TXOP termination on the first link, a spatial stream on the second link to supporting beacon frame reception. The transceiver unit is further configured to receive a beacon frame by using a spatial stream currently supported on the second link at the next TBTT. A first link and a second link exist between a non-AP MLD and a TXOP holder AP MLD. The non-AP MLD is in an EMLSR mode.

With reference to the seventh aspect, in a possible implementation, the first delay is one of the following: The first delay is a period of time taken by the non-AP MLD to change a spatial stream supported on the second link from a single spatial stream to multiple spatial streams; or the first delay is a period of time taken by the non-AP MLD to change from supporting no spatial stream on the second link to supporting a single spatial stream or multiple spatial streams.

With reference to the seventh aspect, in a possible implementation, receiving capabilities are limited when the non-AP MLD performs reception on the first link and the second link by using a single spatial stream. A spatial stream supported on the first link within the TXOP is multiple spatial streams, but no spatial stream is supported on the second link of the non-AP MLD within the TXOP. The processing unit is specifically configured to change, within the first delay after the TXOP termination on the first link, from supporting no spatial stream on the second link to supporting multiple spatial streams.

With reference to the seventh aspect, in a possible implementation, the non-AP MLD includes a first spatial stream and a second spatial stream. A receiving capability is limited when the non-AP MLD performs reception on a link by using the first spatial stream, and a receiving capability is not limited when the non-AP MLD performs reception on a link by using the second spatial stream. With reference to the seventh aspect, in a possible implementation, a spatial stream supported on the first link within the TXOP is multiple spatial streams, including a first spatial stream and a second spatial stream. However, no spatial stream is supported on the second link of the non-AP MLD within the TXOP. A receiving capability is not limited when the non-AP MLD performs reception on the second link by using a single spatial stream. The processing unit is specifically configured to change, within the first delay after the TXOP termination on the first link, from supporting no spatial stream on the second link to supporting a single spatial stream. The single spatial stream supported on the second link supports beacon frame reception. Herein, the second spatial stream supported on the first link within the TXOP may be switched back to the second link.

With reference to the seventh aspect, in a possible implementation, a spatial stream supported on the first link within the TXOP is multiple spatial streams, including a first spatial stream and a second spatial stream. However, no spatial stream is supported on the second link of the non-AP MLD within the TXOP, and a receiving capability is limited when the non-AP MLD performs reception on the second link by using a single spatial stream. The processing unit is specifically configured to change, within the first delay after the TXOP termination on the first link, from supporting no spatial stream on the second link to supporting a single spatial stream. The single spatial stream supported on the second link supports beacon frame reception. Herein, the second spatial stream supported on the first link may be switched to the second link.

With reference to the seventh aspect, in a possible implementation, a spatial stream supported on the second link of the non-AP MLD within the TXOP is a single spatial stream, but a receiving capability is limited when the non-AP MLD performs reception on the second link by using the single spatial stream. The processing unit is specifically configured to change, within the first delay after the TXOP termination on the first link, the spatial stream supported on the second link from a single spatial stream to multiple spatial streams.

With reference to the seventh aspect, in a possible implementation, a link on which a receiving capability is not limited when the non-AP MLD performs reception by using a single spatial stream is a link on which an association request frame and an association response frame are exchanged between the AP MLD and the non-AP MLD in an association process, or a link on which a reassociation request frame and a reassociation response frame are exchanged between the AP MLD and the non-AP MLD in a reassociation process.

According to an eighth aspect, this application provides a communication apparatus. The communication apparatus may be an AP MLD or a chip in an AP MLD, for example, a Wi-Fi chip. The communication apparatus includes a transceiver unit, configured to receive a first frame before a first delay prior to a next TBTT, where the first frame indicates TXOP termination on a first link, and the first delay is used by a non-AP MLD to change a spatial stream on a second link to supporting beacon frame reception. The transceiver unit is further configured to send a beacon frame on the second link at the next TBTT. A first link and a second link exist between an AP MLD and a TXOP holder non-AP MLD, and the non-AP MLD is in an EMLSR mode. Optionally, the communication apparatus further includes a processing unit, configured to generate a beacon frame.

With reference to the eighth aspect, in a possible implementation, the first delay is one of the following: The first delay is a period of time taken by the non-AP MLD to change a spatial stream supported on the second link from a single spatial stream to multiple spatial streams; or the first delay is a period of time taken by the non-AP MLD to change from supporting no spatial stream on the second link to supporting a single spatial stream or multiple spatial streams.

With reference to the eighth aspect, in a possible implementation, a link on which a receiving capability is not limited when the non-AP MLD performs reception by using a single spatial stream is a link on which an association request frame and an association response frame are exchanged between the AP MLD and the non-AP MLD in an association process, or a link on which a reassociation request frame and a reassociation response frame are exchanged between the AP MLD and the non-AP MLD in a reassociation process.

According to a ninth aspect, this application provides a beacon frame transmission method in an EMLSR mode, and the method includes: A first link exists between an EMLSR non-AP MLD and a TXOP holder AP MLD; the non-AP MLD receives a first frame prior to a next TBTT, where the first frame indicates TXOP termination on the first link; and the non-AP MLD maintains a spatial stream supported on the first link, and receives a beacon frame by using the spatial stream supported on the first link at the next TBTT. The spatial stream supported on the first link is a single spatial stream or multiple spatial streams.

According to a tenth aspect, this application provides a communication apparatus. The communication apparatus may be a non-AP MLD or a chip in a non-AP MLD, for example, a Wi-Fi chip. The communication apparatus includes: a transceiver unit, configured to receive a first frame prior to a next TBTT, where the first frame indicates TXOP termination on a first link; and a processing unit, configured to maintain a spatial stream supported on the first link. The transceiver unit is further configured to receive a beacon frame by using the spatial stream supported on the first link at the next TBTT. The spatial stream supported on the first link is a single spatial stream or multiple spatial streams.

It can be seen that, because a link related to a current TXOP and a link for sending a beacon frame at a next TBTT are the same link, and a receiving capability of the non-AP MLD is not limited on the link related to the TXOP, the non-AP MLD maintains a current spatial stream, and can successfully receive a beacon frame at a next TBTT. This can prevent the non-AP MLD in the EMLSR mode from missing an important beacon frame.

According to an eleventh aspect, this application provides a link capability indication method in an EMLSR mode, and the method includes: A non-AP MLD generates and sends a medium access control (medium access control, MAC) frame, where the MAC frame includes indication information, and the indication information indicates an identifier of a link on which a receiving capability is not limited when the non-AP MLD performs reception by using a single spatial stream. It can be learned that in this solution, a non-AP MLD actively reports a link capability of the non-AP MLD. When an AP MLD serves as a TXOP holder, beacon frame transmission between the AP MLD and the EMLSR non-AP MLD can be supported. In addition, when communicating with the EMLSR non-AP MLD, the AP MLD may not send an initial control frame on a link on which a receiving capability is not limited, reducing overheads of some initial control frames. According to a twelfth aspect, this application provides a link capability indication method in an EMLSR mode, and the method includes: An AP MLD receives a MAC frame, where the MAC frame includes indication information, and the indication information indicates an identifier of a link on which a receiving capability is not limited when a non-AP MLD performs reception by using a single spatial stream; and the AP MLD parses the MAC frame, to determine the link on which a receiving capability is not limited when the non-AP MLD performs reception by using a single spatial stream.

According to a thirteenth aspect, this application provides a communication apparatus. The communication apparatus may be a non-AP MLD or a chip in a non-AP MLD, for example, a Wi-Fi chip. The communication apparatus includes: a processing unit, configured to generate a MAC frame, where the MAC frame includes indication information, and the indication information indicates an identifier of a link on which a receiving capability is not limited when the non-AP MLD performs reception by using a single spatial stream; and a transceiver unit, configured to send the MAC frame.

According to a fourteenth aspect, this application provides a communication apparatus. The communication apparatus may be an AP MLD or a chip in an AP MLD, for example, a Wi-Fi chip. The communication apparatus includes: a transceiver unit, configured to receive a MAC frame, where the MAC frame includes indication information, and the indication information indicates an identifier of a link on which a receiving capability is not limited when a non-AP MLD performs reception by using a single spatial stream; and a processing unit, configured to parse the MAC frame, to determine the link on which a receiving capability is not limited when the non-AP MLD performs reception by using a single spatial stream.

In a possible implementation of any one of the eleventh aspect to the fourteenth aspect, the indication information is located in a common information field of a multi-link element of the second frame, and a length of the indication information is 4 bits. Optionally, the indication information is located in an enhanced multi-link capabilities field of the common information field. According to a fifteenth aspect, this application provides a link capability indication method in an EMLSR mode, and the method includes: A non-AP MLD generates and sends a MAC frame, where the MAC frame includes indication information, and the indication information is carried in link information of a link in the MAC frame, to indicate whether a receiving capability on the link is limited when a single spatial stream is used for reception.

According to a sixteenth aspect, this application provides a link capability indication method in an EMLSR mode, and the method includes: An AP MLD receives a MAC frame, where the MAC frame includes indication information, and the indication information is carried in link information of a link in the MAC frame, to indicates whether a receiving capability on the link is limited when a single spatial stream is used for reception; and the AP MLD parses the MAC frame, to determine whether the receiving capability on the link is limited when the single spatial stream is used for reception.

According to a seventeenth aspect, this application provides a communication apparatus. The communication apparatus may be a non-AP MLD or a chip in a non-AP MLD, for example, a Wi-Fi chip. The communication apparatus includes: a processing unit, configured to generate a MAC frame, where the MAC frame includes indication information, and the indication information is carried in link information of a link in the MAC frame, to indicate whether a receiving capability on the link is limited when a single spatial stream is used for reception; and a transceiver unit, configured to send the MAC frame.

According to an eighteenth aspect, this application provides a communication apparatus. The communication apparatus may be an AP MLD or a chip in an AP MLD, for example, a Wi-Fi chip. The communication apparatus includes: a transceiver unit, configured to receive a MAC frame, where the MAC frame includes indication information, and the indication information is carried in link information of a link in the MAC frame, to indicate whether a receiving capability on the link is limited when a single spatial stream is used for reception; and a processing unit, configured to parse the MAC frame, to determine whether the receiving capability on the link is limited when a single spatial stream is used for reception.

In a possible implementation of any one of the fifteenth to eighteenth aspects, the indication information is located in an extremely high throughput medium access control capabilities information field of the second frame, and a length of the indication information is 1 bit. According to a nineteenth aspect, this application provides an uplink non-trigger-based data transmission method in an EMLSR mode, and the method includes: A non-AP MLD performs channel contention on a first link to obtain a TXOP, where a spatial stream on the first link is a single spatial stream; the non-AP MLD maintains channel occupancy on the first link, and switches a spatial stream on a second link to the first link to form multiple spatial streams; and the non-AP MLD sends an uplink PPDU on the first link by using the multiple spatial streams.

It can be learned that, in this embodiment of this application, a non-AP MLD in an EMLSR mode is allowed to still perform autonomous contention, so that the non-AP MLD in the EMLSR mode is supported to transmit uplink data in a non-trigger-based manner.

According to a twentieth aspect, this application provides a communication apparatus. The communication apparatus may be a non-AP MLD or a chip in a non-AP MLD, for example, a Wi-Fi chip. The communication apparatus includes: a processing unit, configured to perform channel contention on a first link to obtain a TXOP, where a spatial stream on the first link is a single spatial stream, and the processing unit is further configured to maintain channel occupancy on the first link, and switch a spatial stream on a second link to the first link to form multiple spatial streams; and a transceiver unit, configured to send an uplink PPDU on the first link by using the multiple spatial streams.

According to a twenty-first aspect, this application provides a communication apparatus, specifically an AP MLD, including a processor and a transceiver.

In a design, the transceiver is configured to send a first frame before a first delay prior to a next TBTT, where the first frame indicates TXOP termination on a first link, and the first delay is used by a non-AP MLD to change a spatial stream on a second link to supporting beacon frame reception. The transceiver is further configured to send a beacon frame on the second link at the next TBTT. A first link and a second link exist between a TXOP holder AP MLD and an EMLSR non-AP MLD, and the AP MLD is to send a beacon frame on the second link at a next TBTT. Optionally, the processor is configured to generate a first frame and a beacon frame.

In a design, the transceiver is configured to receive a first frame before a first delay prior to a next TBTT, where the first frame indicates TXOP termination on a first link, and the first delay is used by a non-AP MLD to change a spatial stream on a second link to supporting beacon frame reception. The transceiver is further configured to send a beacon frame on the second link at the next TBTT. A first link and a second link exist between an AP MLD and a TXOP holder non-AP MLD, and the non-AP MLD is in an EMLSR mode. Optionally, the processor is configured to generate a beacon frame.

In a design, the transceiver is configured to receive a MAC frame, where the MAC frame includes indication information, and the indication information indicates an identifier of a link on which a receiving capability is not limited when a non-AP MLD performs reception by using a single spatial stream; and the processor is configured to parse the MAC frame, to determine the link on which a receiving capability is not limited when the non-AP MLD performs reception by using a single spatial stream.

In a design, the transceiver is configured to receive a MAC frame, where the MAC frame includes indication information, and the indication information is carried in link information of a link in the MAC frame, to indicate whether a receiving capability on the link is limited when a single spatial stream is used for reception; and the processor is configured to parse the MAC frame, to determine whether the receiving capability on the link is limited when a single spatial stream is used for reception.

According to a twenty-second aspect, this application provides a communication apparatus, specifically an AP MLD, including a processor and a transceiver.

In a design, the transceiver is configured to receive a first frame before a first delay prior to a next TBTT, where the first frame indicates TXOP termination on a first link, and the first delay is used by the non-AP MLD to change a spatial stream on a second link to supporting beacon frame reception; and the processor is configured to change, within the first delay after the TXOP termination on the first link, a spatial stream on the second link to supporting beacon frame reception. The transceiver is further configured to receive a beacon frame by using a spatial stream currently supported on the second link at the next TBTT. A first link and a second link exist between a non-AP MLD and a TXOP holder AP MLD.

In a design, the transceiver is configured to send a first frame before a first delay prior to a next TBTT, where the first frame indicates TXOP termination on a first link, and the first delay is used by the non-AP MLD to change a spatial stream on a second link to supporting beacon frame reception; and the processor is configured to change, within the first delay after the TXOP termination on the first link, a spatial stream on the second link to supporting beacon frame reception. The transceiver is further configured to receive a beacon frame by using a spatial stream currently supported on the second link at the next TBTT. A first link and a second link exist between a non-AP MLD and a TXOP holder AP MLD. The non-AP MLD is in an EMLSR mode. In a design, the transceiver is configured to receive a first frame prior to a next TBTT, where the first frame indicates TXOP termination on a first link; and the processor is configured to maintain a spatial stream supported on the first link. The transceiver is further configured to receive a beacon frame by using the spatial stream supported on the first link at the next TBTT. The spatial stream supported on the first link is a single spatial stream or multiple spatial streams.

In a design, the processor is configured to generate a MAC frame, where the MAC frame includes indication information, and the indication information indicates an identifier of a link on which a receiving capability is not limited when the non-AP MLD performs reception by using a single spatial stream; and the transceiver is configured to send the MAC frame.

In a design, the processor is configured to generate a MAC frame, where the MAC frame includes indication information, and the indication information is carried in link information of a link in the MAC frame, to indicate whether a receiving capability on the link is limited when a single spatial stream is used for reception; and the transceiver is configured to send the MAC frame.

In a design, the processor is configured to perform channel contention on a first link to obtain a TXOP, where a spatial stream on the first link is a single spatial stream, and the processor is further configured to maintain channel occupancy on the first link, and switch a spatial stream on a second link to the first link to form multiple spatial streams. The transceiver is configured to send an uplink PPDU on the first link by using the multiple spatial streams.

According to a twenty-third aspect, this application provides an apparatus. The apparatus is implemented in a product form of a chip, and includes an input/output interface and a processing circuit. The apparatus is a chip in an AP MLD.

In a design, the input/output interface is configured to: output a first frame before a first delay prior to a next TBTT, process the first frame by using a radio frequency circuit, and send the first frame by using an antenna, where the first frame indicates TXOP termination on a first link, and the first delay is used by a non-AP MLD to change a spatial stream on a second link to supporting beacon frame reception. The input/output interface is further configured to output a beacon frame at the next TBTT, process the beacon frame by using the radio frequency circuit, and send the beacon frame on the second link by using the antenna. Optionally, the processing circuit is configured to generate a first frame and a beacon frame.

In a design, the input/output interface is configured to input a first frame received by using an antenna and a radio frequency circuit prior to a next TBTT, where the first frame indicates TXOP termination on a first link, and the first delay is used by a non-AP MLD to change a spatial stream on a second link to supporting beacon frame reception. The input/output interface is further configured to output a beacon frame at the next TBTT, process the beacon frame by using the radio frequency circuit, and send the beacon frame on the second link by using the antenna. Optionally, the processing circuit is configured to generate a beacon frame.

In a design, the input/output interface is configured to input a MAC frame received by using an antenna and a radio frequency circuit, where the MAC frame includes indication information, and the indication information indicates an identifier of a link on which a receiving capability is not limited when a non-AP MLD performs reception by using a single spatial stream; and the processing circuit is configured to parse the MAC frame, to determine the link on which a receiving capability is not limited when the non-AP MLD performs reception by using a single spatial stream. In a design, the input/output interface is configured to input a MAC frame received by using an antenna and a radio frequency circuit, where the MAC frame includes indication information, and the indication information is carried in link information of a link in the MAC frame, to indicate whether a receiving capability on the link is limited when a single spatial stream is used for reception; and the processing circuit is configured to parse the MAC frame, to determine whether the receiving capability on the link is limited when a single spatial stream is used for reception. According to a twenty-fourth aspect, this application provides an apparatus. The apparatus is implemented in a product form of a chip, and includes an input/output interface and a processing circuit. The apparatus is a chip in a non-AP MLD.

In a design, the input/output interface is configured to input a first frame received by using an antenna and a radio frequency circuit before a first delay prior to a next TBTT, where the first frame indicates TXOP termination on a first link, and the first delay is used by the non-AP MLD to change a spatial stream on a second link to supporting beacon frame reception; and the processing circuit is configured to change, within the first delay after the TXOP termination on the first link, a spatial stream on the second link to supporting beacon frame reception. The input/output interface is configured to input a beacon frame received by using the antenna and the radio frequency circuit by using a spatial stream currently supported on the second link at the next TBTT.

In a design, the input/output interface is configured to output a first frame before a first delay prior to a next TBTT, process the first frame by using a radio frequency circuit, and send the first frame by using an antenna, where the first frame indicates TXOP termination on a first link, and the first delay is used by the non-AP MLD to change a spatial stream on a second link to supporting beacon frame reception. The processing circuit is configured to change, within the first delay after the TXOP termination on the first link, the spatial stream on the second link to supporting beacon frame reception. The input/output interface is further configured to input a beacon frame received by using the antenna and the radio frequency circuit by using a spatial stream currently supported on the second link at the next TBTT.

In a design, the input/output interface is configured to input a first frame received by using an antenna and a radio frequency circuit prior to a next TBTT, where the first frame indicates TXOP termination on a first link. The processing circuit is configured to maintain a spatial stream supported on the first link. The input/output interface is configured to input a beacon frame received by using the antenna and the radio frequency circuit at the next TBTT by using the spatial stream supported on the first link. The spatial stream supported on the first link is a single spatial stream or multiple spatial streams.

In a design, the processing circuit is configured to generate a MAC frame, where the MAC frame includes indication information, and the indication information indicates an identifier of a link on which a receiving capability is not limited when the non-AP MLD performs reception by using a single spatial stream. The input/output interface is configured to output the MAC frame, process the MAC frame by using the radio frequency circuit, and send the MAC frame by using the antenna. In a design, the processing circuit is configured to generate a MAC frame, where the indication information is carried in link information of a link in the MAC frame, to indicate whether a receiving capability on the link is limited when a single spatial stream is used for reception. The input/output interface is configured to output the MAC frame, process the MAC frame by using a radio frequency circuit, and send the MAC frame by using an antenna.

In a design, the processing circuit is configured to perform channel contention on a first link to obtain a TXOP, where a spatial stream on the first link is a single spatial stream. The processing circuit is further configured to maintain channel occupancy on the first link, and switch a spatial stream on a second link to the first link to form multiple spatial streams. The input/output interface is configured to output an uplink PPDU, process the uplink PPDU by using a radio frequency circuit, and send the uplink PPDU on the first link by using an antenna and by using the multiple spatial streams.

According to a twenty-fifth aspect, this application provides a computer-readable storage medium. The computer-readable storage medium stores program instructions. When the program instructions are run on a computer, the computer is enabled to perform the beacon frame transmission method in the EMLSR mode according to the first aspect, the second aspect, the fifth aspect, the sixth aspect, or the ninth aspect.

According to a twenty-sixth aspect, this application provides a computer-readable storage medium. The computer-readable storage medium stores program instructions. When the program instructions are run on a computer, the computer is enabled to perform the link capability indication method in the EMLSR mode according to the eleventh aspect or the fifteenth aspect.

According to a twenty-seventh aspect, this application provides a computer-readable storage medium. The computer-readable storage medium stores program instructions. When the program instructions are run on a computer, the computer is enabled to perform the uplink non-trigger-based data transmission method in the EMLSR mode according to the nineteenth aspect. According to a twenty-eighth aspect, this application provides a computer program product including program instructions. When the computer program product runs on a computer, the computer is enabled to perform the beacon frame transmission method in the EMLSR mode according to the first aspect, the second aspect, the fifth aspect, the sixth aspect, or the ninth aspect. According to a twenty-ninth aspect, this application provides a computer program product including program instructions. When the computer program product runs on a computer, the computer is enabled to perform the link capability indication method in the EMLSR mode according to the eleventh aspect or the fifteenth aspect.

According to a thirtieth aspect, this application provides a computer program product including program instructions. When the computer program product runs on a computer, the computer is enabled to perform the uplink non-trigger-based data transmission method in the EMLSR mode according to the nineteenth aspect.

According to embodiments of this application, a non-AP MLD in an EMLSR mode can be prevented from missing an important beacon frame.

### BRIEF DESCRIPTION OF DRAWINGS

To describe the technical solutions in embodiments of this application more clearly, the following briefly describes the accompanying drawings used for describing the embodiments.
FIG. 1 is a schematic diagram depicting an architecture of a wireless communication system according to an embodiment of this application;
FIG. 2a is a schematic diagram depicting a structure of a multi-link device according to an embodiment of this application;
FIG. 2b is a schematic diagram depicting another structure of a multi-link device according to an embodiment of this application;
FIG. 3 is a schematic diagram of multi-link communication according to an embodiment of this application;
FIG. 4 is a schematic diagram of communication between a non-AP MLD and an AP MLD in an EMLSR mode;
FIG. 5 is a schematic flowchart of a beacon frame transmission method in an EMLSR mode according to an embodiment of this application;
FIG. 6 is a sequence diagram 1 of beacon frame transmission when receiving capabilities between links are asymmetric according to an embodiment of this application;
FIG. 7a is a sequence diagram 2 of beacon frame transmission when receiving capabilities between links are asymmetric according to an embodiment of this application;
FIG. 7b is a sequence diagram 3 of beacon frame transmission when receiving capabilities between links are asymmetric according to an embodiment of this application;
FIG. 8 is a sequence diagram 4 of beacon frame transmission when receiving capabilities between links are asymmetric according to an embodiment of this application;
FIG. 9 is a sequence diagram of beacon frame transmission when receiving capabilities between links are symmetric according to an embodiment of this application;
FIG. 10 is another schematic flowchart of a beacon frame transmission method in an EMLSR mode according to an embodiment of this application;
FIG. 11 is a schematic flowchart of a link capability indication method in an EMLSR mode according to an embodiment of this application;
FIG. 12 is a schematic diagram of a frame format of an EHT MAC capabilities information field according to an embodiment of this application;
FIG. 13 is a schematic diagram of a frame format of a STA control field according to an embodiment of this application;
FIG. 14 is a schematic diagram of a frame format of an EML capabilities field according to an embodiment of this application;
FIG. 15 is a schematic flowchart of an uplink non-trigger-based data transmission method in an EMLSR mode according to an embodiment of this application;
FIG. 16a is a sequence diagram 1 of an uplink non-trigger-based data transmission method according to an embodiment of this application;
FIG. 16b is a sequence diagram 2 of an uplink non-trigger-based data transmission method according to an embodiment of this application;
FIG. 16c is a sequence diagram 3 of an uplink non-trigger-based data transmission method according to an embodiment of this application;
FIG. 17 is a schematic diagram depicting a structure of a communication apparatus 1 according to an embodiment of this application;
FIG. 18 is a schematic diagram depicting a structure of a communication apparatus 2 according to an embodiment of this application; and
FIG. 19 is a schematic diagram depicting a structure of a communication apparatus 1000 according to an embodiment of this application.

### DESCRIPTION OF EMBODIMENTS

The following clearly and completely describes the technical solutions in embodiments of this application with reference to the accompanying drawings in embodiments of this application.

To clearly describe technical solutions in embodiments of this application, terms such as "first" and "second" are used in embodiments of this application to distinguish between same items or similar items that provide basically same functions or purposes. For example, a first link and a second link are merely used to distinguish between different information, and do not limit a sequence thereof. A person skilled in the art may understand that the terms such as "first" and "second" do not limit a quantity and an execution sequence, and the terms such as "first" and "second" do not indicate a definite difference.

In the description of this application, unless otherwise specified, "/" generally indicates an "or" relationship between associated objects. For example, A/B may indicate A or B. The term "and/or" in this specification describes only an association relationship for describing associated objects and represents that three relationships may exist. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

In this application, the word such as "example" or "for example" is used to represent giving an example, an illustration, or a description. Any embodiment or design scheme described by using "example" or "for example" in this application shall not be construed as being more preferred or having more advantages than another embodiment or design scheme. Exactly, use of the word "example", "in an example", "for example", or the like is intended to present a related concept in a specific manner.

For ease of understanding the method provided in embodiments of this application, the following describes a system architecture of the method provided in embodiments of this application. It may be understood that the system architecture described in embodiments of this application is intended to describe the technical solutions in embodiments of this application more clearly, and do not constitute any limitation on the technical solutions provided in embodiments of this application. An embodiment of this application provides a beacon frame transmission method in an EMLSR mode. By considering an impact of a spatial stream switching delay on beacon frame reception, a transmission opportunity (transmission opportunity, TXOP) holder is restricted to terminate a TXOP in advance for a period of time, to ensure that a non-AP MLD in the EMLSR mode can complete spatial stream switching between links prior to a next target beacon transmission time (target beacon transmission time, TBTT). This can prevent the non-AP MLD in the EMLSR mode from missing an important beacon frame.

The beacon frame transmission method in the EMLSR mode may be applied to a wireless communication system, for example, a wireless local area network system. The method may be implemented by a communication device in the wireless communication system or a chip or a processor in the communication device. The communication device may be a wireless communication device that supports parallel transmission on a plurality of links. For example, the communication device may be referred to as a multi-link device (multi-link device, MLD) or a multi-band device. Compared with a communication device that supports only single-link transmission, the multi-link device has higher transmission efficiency and a higher throughput. The multi-link device includes one or more affiliated stations (affiliated STA). The affiliated station is a logical station and may work on a link, a frequency band, or a channel. The affiliated station may be an access point (access point, AP) or a non-access point station (non-access point station, non-AP STA). In 802.11be, a multi-link device whose affiliated station is an AP is referred to as an AP multi-link device (AP multi-link device, AP MLD), and a multi-link device whose affiliated station is a non-AP STA is referred to as a non-AP multi-link device (non-AP multi-link device, non-AP MLD).

Optionally, a multi-link device may include a plurality of logical stations. Each logical station works on a link, but the plurality of logical stations are allowed to work on a same link. During data transmission between an AP MLD and a non-AP MLD, a link identifier may be used to identify a link or a station on a link. Before communication, the AP MLD and the non-AP MLD may first negotiate or communicate for a correspondence between a link identifier and a link or a station on a link. Therefore, during data transmission, the link identifier is carried without transmitting a large amount of signaling information to indicate the link or the station on the link. This reduces signaling overheads and improves transmission efficiency.

In an example, a management frame, such as a beacon (beacon) frame or an association request frame, sent when the AP MLD establishes a basic service set (basic service set, BSS) carries one element, and the element includes a plurality of link identifier information fields. The link identifier information field may indicate a correspondence between a link identifier and a station that works on a link corresponding to the link identifier. A link identifier information field includes a link identifier, and includes one or more pieces of the following information: a medium access control (medium access control, MAC) address, an operating class, and a channel number. One or more of the MAC address, the operating class, and the channel number may indicate one link. For an AP, the MAC address of the AP is a BSSID (basic service set identifier, basic service set identifier) of the AP. In another example, in an association process between multi-link devices, an AP MLD and a non-AP MLD negotiate for a plurality of link identifier information fields. Multi-link association refers to one association between an AP of the AP MLD and a STA of the non-AP MLD. The association may facilitate separate association between a plurality of STAs of the non-AP MLD and a plurality of APs of the AP MLD, where one STA is associated with one AP. One or more STAs in the non-AP MLD may establish an association relationship with and then communicate with one or more APs in the AP MLD.

Optionally, the multi-link device may implement wireless communication in compliance with the IEEE 802.11 series protocols. For example, a station in compliance with the extremely high throughput, a station in compliance with IEEE 802.11be or is compatible with IEEE 802.11be implements communication with another device. Certainly, the another device may be a multi-link device, or may not be a multi-link device.

The beacon frame transmission method in the EMLSR mode provided in embodiments of this application may be applied to a scenario in which one node communicates with one or more nodes, a scenario of single-user uplink/downlink communication or a scenario of multi-user uplink/downlink communication, or a scenario of device-to-device (device to device, D2D) communication. In embodiments of this application, the term "communication" may also be described as "data transmission", "information transmission", or "transmission". The term "transmission" may generally refer to sending and receiving.

Any one of the foregoing nodes may be an AP MLD, or may be a non-AP MLD. For example, the beacon frame transmission method in the EMLSR mode is applied to a scenario in which an AP MLD communicates with a non-AP MLD, a scenario in which a non-AP MLD communicates with a non-AP MLD, or a scenario in which an AP MLD communicates with an AP MLD. This is not limited in embodiments of this application. Optionally, one of the foregoing nodes may be a multi-link device, and the other nodes may be multi-link devices, or may not be multi-link devices. A single-link device may be a STA.

For ease of description, a scenario in which an AP MLD communicates with a STA is used as an example below to describe the system architecture of this application. It may be understood that the STA herein is in a broad sense, which refers to a STA side, and may be a single-link STA or a non-AP MLD.

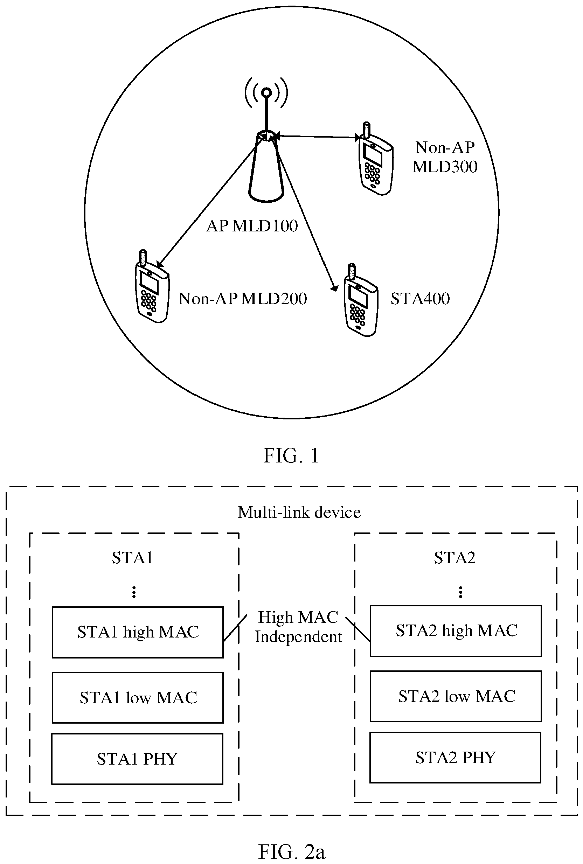

Refer to FIG. 1. FIG. 1 is a schematic diagram depicting an architecture of a wireless communication system according to an embodiment of this application. As shown in FIG. 1, the wireless communication system includes at least one AP MLD (for example, an AP MLD100 in FIG. 1) and at least one non-AP MLD (for example, a non-AP MLD200 and a non-AP MLD300 in FIG. 1). Optionally, FIG. 1 further includes a legacy station (for example, a single-link non-AP STA400 in FIG. 1, also referred to as a STA400) that supports transmission only on a single link. The AP MLD is a multi-link device that provides a service for the non-AP MLD, and the non-AP MLD may communicate with the AP MLD on a plurality of links, to implement improved throughput. An AP in the AP MLD may communicate with a STA in the non-AP MLD on a link. It may be understood that quantities of AP MLDs and non-AP MLDs in FIG. 1 are merely an example.

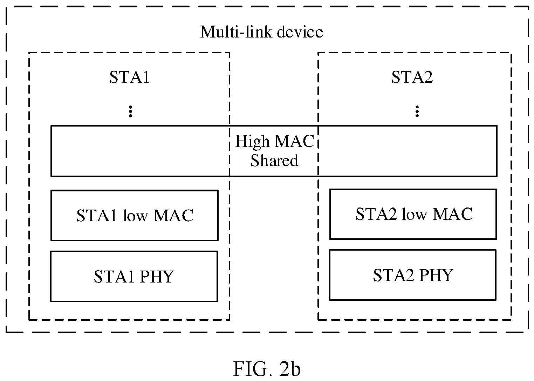

Optionally, refer to FIG. 2a. FIG. 2a is a schematic diagram depicting a structure of a multi-link device according to an embodiment of this application. The 802.11 standard focuses on an 802.11 physical layer (physical layer, PHY) part and a medium access control (medium access control, MAC) layer part in a multi-link device. As shown in FIG. 2a, a plurality of STAs included in the multi-link device are independent of each other at a low MAC (low MAC) layer and a PHY layer, and are also independent of each other at a high MAC (high MAC) layer. Refer to FIG. 2b. FIG. 2b is a schematic diagram depicting another structure of a multi-link device according to an embodiment of this application. As shown in FIG. 2b, a plurality of STAs included in the multi-link device are independent of each other at a low MAC (low MAC) layer and a PHY layer, and share a high MAC (high MAC) layer. Certainly, in a multi-link communication process, a non-AP MLD may use a structure with independent high MAC layers, and the AP MLD uses a structure with a shared high MAC layer; or the non-AP MLD may use a structure with a shared high MAC layer, and the AP MLD uses a structure with independent high MAC layers; or both the non-AP MLD and the AP MLD may use a structure with independent high MAC layers. A schematic diagram of an internal structure of the multi-link device is not limited in embodiments of this application. FIG. 2a and FIG. 2b are merely examples for description. For example, the high MAC layer or the low MAC layer may be implemented by a processor in a chip system of the multi-link device, or may be implemented by different processing modules in a chip system.

For example, the multi-link device in embodiments of this application may be a single-antenna device, or may be a multi-antenna device. For example, the multi-link device may be a device with more than two antennas. The quantity of antennas included in the multi-link device is not limited in embodiments of this application.

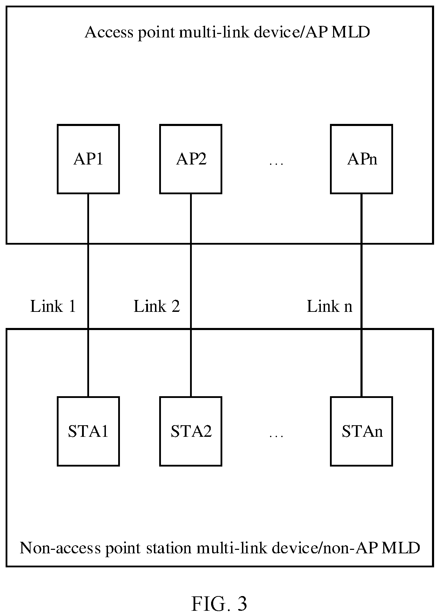

Optionally, refer to FIG. 3. FIG. 3 is a schematic diagram of multi-link communication according to an embodiment of this application. As shown in FIG. 3, an AP MLD includes n stations, which are an AP1, an AP2, ..., and an APn. A non-AP MLD also includes n stations, which are a STA1, a STA2, ..., and a STAn. The AP MLD and the non-AP MLD may perform parallel communication on a link 1, a link 2, ..., and a link n. An AP in the AP MLD may establish an association relationship with a STA in the non-AP MLD. For example, the STA1 in the non-AP MLD establishes an association relationship with the AP1 in the AP MLD. The STA2 in the non-AP MLD establishes an association relationship with the AP2 in the AP MLD. The STAn in the non-AP MLD establishes an association relationship with the APn in the AP MLD.

For example, a multi-link device (which may be a non-AP MLD or an AP MLD herein) is an apparatus having a wireless communication function. The apparatus may be an entire system device, or may be a chip, a processing system, or the like installed in an entire system device. A device in which the chip or the processing system is installed may implement the method and the function in embodiments of this application under the control of the chip or the processing system. For example, in embodiments of this application, a non-AP MLD has a wireless transceiver function, may support 802.11 series protocols, and may communicate with an AP MLD or another non-AP MLD. For example, the non-AP MLD is any user communication device that allows a user to communicate with an AP and communicate with a WLAN. For example, the non-AP MLD may be user equipment that can connect to a network, for example, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), a mobile phone, an internet of things node in the internet of things, a vehicle-mounted communication apparatus in the internet of vehicles, or the like. The non-AP MLD may alternatively be a chip and a processing system in the foregoing terminals. The AP MLD in embodiments of this application is an apparatus that provides a service for the non-AP MLD, and may support the 802.11 series protocols. For example, the AP MLD may be a communication entity such as a communication server, a router, a switch, or a bridge, or the AP MLD may include a macro base station, a micro base station, a relay station, and the like in various forms. Certainly, the AP MLD may alternatively be a chip and a processing system in the devices in various forms. In this way, the method and the function in embodiments of this application are implemented.

It may be understood that the multi-link device may support high-rate and low-latency transmission. With continuous evolution of application scenarios of a wireless local area network, the multi-link device may be further applied to more scenarios, for example, a sensor node (such as a smart meter, a smart electricity meter, and a smart air detection node) in smart city, a smart device (such as a smart camera, a projector, a display, a television, a stereo, a refrigerator, and a washing machine) in smart home, a node in the internet of things, an entertainment terminal (such as AR, VR, or other wearable devices), a smart device (such as a printer and a projector) in smart office, an internet of vehicles device in the internet of vehicles, and some infrastructures (vehicles a vending machine, a self-service navigation station of a supermarket, a self-service cash register device, and a self-service ordering machine) in daily life scenarios. Specific forms of the non-AP MLD and the AP MLD are not limited in embodiments of this application, and are merely examples for description herein. The 802.11 protocol may be a protocol that supports 802.1The or is compatible with 802.11be.

The foregoing content briefly describes the system structure in embodiments of this application. For better understanding of the technical solutions of this application, the following briefly describes content related to this application. 1. Beacon (beacon) frame and target beacon transmission time (target beacon transmission time,

### TBTT)

A beacon frame is a management frame periodically sent in a WLAN. Usually, the beacon frame is sent by an access point device (including a single-link AP and an AP MLD), to broadcast basic information of the access point device. The beacon frame usually includes some important information, for example, a critical update (Critical Update), which includes a BSS parameter update, a TBTT information update, and the like. Therefore, for a station device (including a single-link STA and a non-AP MLD), it is recommended that no beacon frame is missed. This is because if a beacon frame carries a BSS parameter update or a TBTT information update, but the station device misses the beacon frame, the station device may fail to work normally.

TBTT indicates pre-determined time for beacon transmission. For multi-link communication, the AP MLD can broadcast a TBTT on each link. At a TBTT on a link, the AP MLD actively sends a beacon frame on the link, and the non-AP MLD actively receives the beacon frame on the link. Then, the non-AP MLD may use the beacon frame to perform operations such as time synchronization and viewing a traffic indication information (traffic indication message, TIM) field. In other words, the beacon frame is periodically sent according to the TBTT, each link has its own TBTT, and TBTTs on different links may be different.

### 2. Spatial stream (spatial stream) and antenna

A radio sends a plurality of signals at a same time, and each signal is referred to as a spatial stream. In a multiple-input multiple-output (multiple input multiple output, MIMO) system, a quantity of spatial streams is usually less than or equal to a quantity of antennas. If the quantity of antennas at a transmit end is different from that at a receive end, the quantity of spatial streams is less than or equal to a minimum quantity of antennas at the transmit end or the receive end. For example, a 4×4 (four transmit antennas and four receive antennas, also referred to as four inputs and four outputs) MIMO system may be used to transmit four or less spatial streams, and a 3×2 (three transmit antennas and two receive antennas) MIMO system may transmit two or less spatial streams.

Optionally, a relationship between an antenna and a spatial stream in a MIMO system may still be used in this application.

### 3. Process of communication between a non-AP MLD and an AP MLD in an EMLSR mode

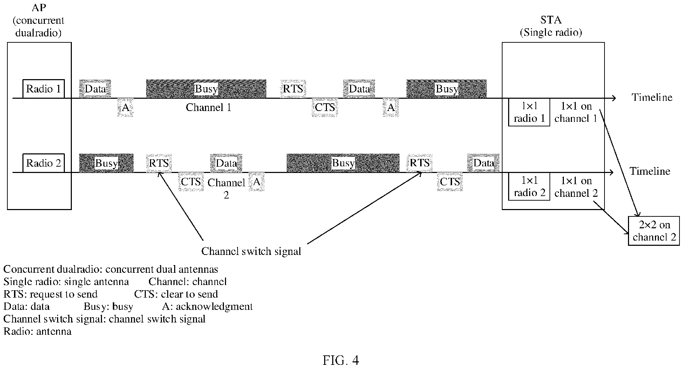

Refer to FIG. 4. FIG. 4 is a schematic diagram of communication between a non-AP MLD and an AP MLD in an EMLSR mode. The non-AP MLD in the EMLSR mode performs reception on each link by using one antenna, that is, the non-AP MLD in the EMLSR mode performs a channel listening operation (that is, CCA) on each link by using one antenna. In addition, the non-AP MLD in the EMLSR mode can receive, on each link by using one antenna, an initial control frame sent by the AP MLD of an OFDM PPDU type and a non-HT duplicate PPDU type, and reception of frames of other types is not supported. It should be understood that, when a transmit end uses one antenna for sending on a link, and a receive end also uses one antenna for reception on the link, a 1×1 (one input and one output) antenna configuration is provided for the link. When the transmit end uses two antennas for sending on a link and the receive end also uses two antennas for reception on the link, a 2×2 (two inputs and two outputs) antenna configuration is provided for the link. As shown in FIG. 4, an AP sends an initial control frame, for example, a request-to-send (request to send, RTS) frame, on a channel 2 (channel 2, ch2 for short) by using one antenna. The initial control frame includes a channel switch signal (channel switch signal), and the channel switch signal indicates a STA to switch an antenna for reception. The STA receives, on the channel 2 by using one antenna, the initial control frame sent by the AP (in this case, a 1×1 antenna configuration is provided for the channel 2), replies a clear-to-send frame (clear to send, CTS) on the channel 2, and temporarily switches a receive antenna (radio) on a channel 1 (channel 1, ch1 for short) to the channel 2 based on an indication of the channel switch signal in the initial control frame, to perform downlink data transmission on the channel 2.

Some management frames (for example, a beacon frame and an association request frame in an EHT standard) are long in length and complex, a PPDU type of the management frame is usually a PPDU type of a higher standard, for example, an HT type, a very high throughput (very high throughput, VHT) type, a high efficiency (high efficient, HE) type, or an EHT type. Therefore, how a non-AP MLD in an EMLSR mode receives a management frame (for example, a beacon frame or an association request frame) in a listening operation becomes an urgent problem to be resolved.

For the problem of how a non-AP MLD in an EMLSR mode receives a management frame (such as a beacon frame and an association request frame) in a listening operation, in an implementation, due to periodicity of a beacon (beacon) frame, the non-AP MLD may be prepared prior to a TBTT, and then receive a beacon frame in a case that no RTS frame is needed, that is, the AP MLD does not send an initial control frame, and other individually addressed management frames may be transmitted as data frames. In another implementation, a management frame and a broadcast frame are added to a frame type that can be successfully received by the non-AP MLD in the EMLSR mode by using one antenna. It should be understood that the EMLSR mode exists only when a receiving capability of the STA is limited. Therefore, if the receiving capability of the non-AP MLD by using one antenna is expanded to a degree at which management frames can be freely received, it actually requires an improved receiving capability of the non-AP MLD by using one antenna.

Embodiments of this application provide a beacon frame transmission method in an EMLSR mode.

A TXOP holder (holder) is restricted to terminate a TXOP in a period of time prior to a closest TBTT, to ensure that a non-AP MLD in the EMLSR mode can complete spatial stream switching between links prior to the next TBTT. This can prevent the non-AP MLD in the EMLSR mode from missing an important beacon frame.

The following describes in detail the technical solutions provided in this application with reference to more accompanying drawings.

The technical solutions provided in this application are described in detail by using four embodiments. Embodiment 1 describes how to transmit a beacon frame between an AP MLD and a non-AP MLD in an EMLSR mode when the AP MLD serves as a TXOP holder. Embodiment 2 describes how to transmit a beacon frame between an AP MLD and a non-AP MLD when the non-AP MLD serves as a TXOP holder. Embodiment 3 describes a link capability indication method in an EMLSR mode. Embodiment 4 describes how a non-AP MLD in an EMLSR mode transmits uplink non-trigger-based data, that is, how to independently send the uplink data. It should be understood that the technical solutions described in Embodiment 1 to Embodiment 4 of this application may be combined to form a new embodiment, and parts that have a same or similar concept or solution may be mutually referenced or combined. The following separately describes the embodiments in detail.

It should be understood that both the AP MLD and the non-AP MLD in this application support the 802.11be protocol (or referred to as the Wi-Fi 7 or the EHT protocol), and may further support another WLAN communication protocol, for example, protocols such as 802.11ax and 802.11ac. It should be understood that the AP MLD and the non-AP MLD in this application may further support a next-generation protocol of 802.11be. In other words, the method provided in this application is applicable not only to the 802.11be protocol, but also to a next-generation protocol of 802.1 1be.

It should be further understood that the non-AP MLD in this application is in (or works in) an EMLSR mode. To be specific, the non-AP MLD in this application performs a listening operation (that is, CCA) and receives an initial control frame of an OFDM PPDU type and a non-HT duplicate PPDU type on each link by using one antenna. For ease of description, in this specification, a non-AP MLD in (or working in) an EMLSR mode is briefly referred to as an EMLSR non-AP MLD.

### Embodiment 1

Embodiment 1 of this application mainly describes how to transmit a beacon frame between an AP MLD and a non-AP MLD in an EMLSR mode when the AP MLD serves as a TXOP holder (holder), to prevent the non-AP MLD in the EMLSR mode from missing an important beacon frame.

The beacon frame includes some important information, for example, a critical update (Critical Update), which includes a TBTT information update. If the non-AP MLD misses the beacon frame, and performs reception based on an original (or an old) TBTT, a new beacon frame is missed. In addition, for a delivery traffic indication information (delivery traffic indication message, DTIM) beacon frame, if the non-AP MLD misses the DTIM beacon frame, the non-AP MLD may miss a downlink data packet transmission opportunity. Therefore, for a non-AP MLD, it is recommended that no beacon frame is missed.

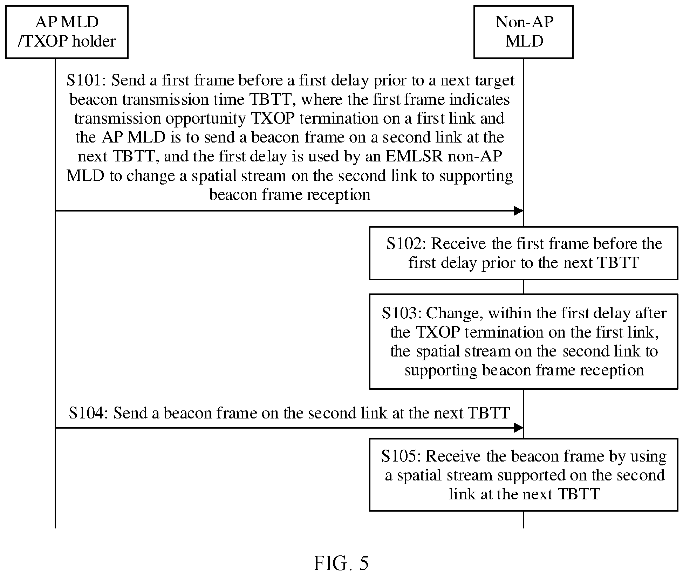

Refer to FIG. 5. FIG. 5 is a schematic flowchart of a beacon frame transmission method in an EMLSR mode according to an embodiment of this application. As shown in FIG. 5, the beacon frame transmission method in the EMLSR mode includes but is not limited to the following steps. S101: A TXOP holder (AP MLD) sends a first frame before a first delay prior to a next target beacon transmission time TBTT, where the first frame indicates transmission opportunity TXOP termination on a first link and the AP MLD is to send a beacon frame on a second link at the next TBTT, and the first delay is used by an EMLSR non-AP MLD to change a spatial stream on the second link to supporting beacon frame reception.

S102: The non-AP MLD receives the first frame before the first delay prior to the next TBTT. S103: The non-AP MLD changes, within the first delay after the TXOP termination on the first link, a spatial stream on the second link to supporting beacon frame reception.

S104: The AP MLD sends a beacon frame on the second link at the next TBTT.

S105: The non-AP MLD receives the beacon frame by using a spatial stream supported on the second link at the next TBTT.

Optionally, because a beacon frame is periodically sent, prior to a next TBTT, if the AP MLD and the EMLSR non-AP MLD are within a TXOP, and a link related to the TXOP is not the same as a link on which the AP MLD sends a beacon frame at the next TBTT, to ensure that the EMLSR non-AP MLD can successfully receive the beacon frame at the next TBTT, a spatial stream needs to be switched after the TXOP termination, to receive the beacon frame at the next TBTT. Optionally, a first link and a second link exist between a TXOP holder AP MLD and an EMLSR non-AP MLD. The AP MLD obtains a transmission opportunity (transmission opportunity, TXOP) on the first link through channel contention, and performs data transmission with the EMLSR non-AP MLD on the first link within the TXOP. Therefore, the AP MLD is a TXOP holder. If the AP MLD determines that the AP MLD is to send a beacon frame on the second link at a next target beacon transmission time (target beacon transmission time, TBTT), and the second link and a link (that is, the foregoing first link) related to the current TXOP are not a same link, the AP MLD sends a first frame before a first delay prior to the next TBTT. Herein, an AP on the link (that is, the first link) related to the TXOP needs to know a timing synchronization function (timing synchronization function, TSF) on another link, to determine a link related to a next TBTT. The first frame indicates TXOP termination (TXOP termination) on the first link. The first frame may be a control frame, for example, a contention-free end (Contention free end, CF-end) frame or a CTS-to-self (clear to send to self) frame. Correspondingly, the non-AP MLD receives the first frame before the first delay prior to the next TBTT. The non-AP MLD changes, within the first delay after the TXOP termination on the first link, a spatial stream on the second link to supporting beacon frame reception. In other words, the non-AP MLD needs to complete changing the spatial stream on the second link in a period of time from the TXOP termination on the first link to the next TBTT. Alternatively, the period of time taken by the non-AP MLD to change the spatial stream on the second link to supporting beacon frame reception should be shorter than or equal to the first delay. The AP MLD sends a beacon frame on the second link at the next TBTT. Correspondingly, the non-AP MLD receives the beacon frame by using a spatial stream currently supported on the second link at the next TBTT. It should be understood that, prior to the next TBTT, the non-AP MLD has switched all or a part of spatial streams supported on the second link to the second link. Therefore, at the next TBTT, the non-AP MLD may successfully receive the beacon frame. The first delay is used by the EMLSR non-AP MLD to change a spatial stream on the second link to supporting beacon frame reception.

Optionally, the first delay may be further described as: the first delay is used by the EMLSR non-AP MLD to switch a receive antenna on the second link to supporting beacon frame reception. It should be understood that "switching a receive antenna" in this application refers to "switching a working frequency band (or a working link) of a receive antenna", and is logical switching. For example, "switching all or a part of receive antennas on a link to another link" means switching all or a part of receive antennas currently working on a link to another link.

In this application, a "next TBTT" is a TBTT after and closest to a TXOP in terms of time.

It should be understood that the first link and the second link in this embodiment of this application are two different links between the AP MLD and the EMLSR non-AP MLD. In actual application, there may be more links (more than two links) between the non-AP MLD and the AP MLD. The first link represents a link related to a current TXOP in a plurality of links between the non-AP MLD and the AP MLD, and the second link represents a link on which a next TBTT arrives in the plurality of links between the non-AP MLD and the AP MLD.

Optionally, when the non-AP MLD performs reception on both the first link and the second link by using a single spatial stream (or a single antenna), a receiving capability on one link is limited (that is, only PPDUs of some types (that is, the OFDM type and the non-HT duplicate type) can be received), and a receiving capability on the other link is not limited (that is, PPDUs of all types can be received). Alternatively, when the non-AP MLD performs reception on both the first link and the second link by using a single spatial stream (or a single antenna), receiving capabilities on both the two links are limited (that is, only PPDUs of some types can be received). Before sending the first frame, the AP MLD determines the first delay based on a receiving capability on each link when the non-AP MLD performs reception by using a single spatial stream (or a single antenna). For example, the non-AP MLD actively reports a receiving capability on each link when the non-AP MLD performs reception by using a single spatial stream (or a single antenna). For specific implementation, refer to descriptions in the following Embodiment 3, and details are not described herein.

Optionally, before receiving a beacon, the EMLSR non-AP MLD needs to switch a spatial stream on another link to a link for receiving the beacon frame. Therefore, a specific switching delay exists. In this application, one or more EMLSR switching delays may be defined from a perspective of spatial stream. Details are as follows: (1) An EMLSR delay 1 is a period of time taken to switch from a single spatial stream on one link to multiple spatial streams on another link. (2) An EMLSR delay 2 is a period of time taken to switch from multiple spatial streams on one link to a single spatial stream on another link. (3) An EMLSR delay 3 is a period of time taken to switch from multiple spatial streams on one link to multiple spatial streams on another link. In this application, one or more EMLSR switching delays may alternatively be defined from a perspective of antenna. Details are as follows: (1) An EMLSR delay 1 is a period of time taken to switch a single-antenna configuration on one link to another link to form a multi-antenna configuration. (2) An EMLSR delay 2 is a period of time taken to switch a part of a multi-antenna configuration on one link to another link to form a single-antenna configuration. (3) An EMLSR delay 3 is a period of time taken to switch a multi-antenna configuration on one link to another link to form a multi-antenna configuration.

It should be understood that the EMLSR switching delay in this application is for the non-AP MLD. In other words, within a defined EMLSR switching delay, the non-AP MLD needs to complete spatial stream/receive antenna switching/changing between links. The EMLSR delay 1 and the EMLSR delay 2 may be the same, or may be different. In other words, when the EMLSR delay 1 is the same as the EMLSR delay 2, only one EMLSR switching delay may be defined in this application. Alternatively, the EMLSR delay 3 may not be defined in this application, and is determined based on the EMLSR delay 1 and the EMLSR delay 2. For example, the EMLSR delay 3 is a maximum value of the EMLSR delay 1 and the EMLSR delay 2, or a sum of the EMLSR delay 1 and the EMLSR delay 2.

It should be further understood that "spatial stream switching" mentioned in this application is essentially generated due to receive antenna switching between links. For example, before the AP MLD obtains a TXOP, the non-AP MLD has only a single-antenna configuration on a link. After the TXOP termination, the non-AP MLD configures dual antennas for the link, that is, the dual antennas work on a same working frequency band (that is, the link). A quantity of spatial streams is increased, that is, the quantity of spatial streams is also switched from a single stream to dual streams.

Optionally, the first delay may be one of the EMLSR delay 1, the EMLSR delay 2, and the EMLSR delay 3. The following separately describes specific implementations of the first delay when receiving capabilities between links (link) are asymmetric and all receiving capabilities are limited when the non-AP MLD performs reception by using a single spatial stream (or a single antenna).

### 1. Receiving capabilities between links are asymmetric

Optionally, that receiving capabilities between links (link) are asymmetric when the non-AP MLD performs reception by using a single spatial stream (or a single antenna) may be described from two perspectives.

From a perspective of spatial stream, the EMLSR non-AP MLD includes two types of spatial streams: a first-type spatial stream and a second-type spatial stream. A receiving capability is limited when the non-AP MLD performs reception on a link by using a first-type spatial stream. It may be represented as that only PPDUs of some types (for example, a non-HT duplicate type) can be received on the link in this case. A receiving capability is not limited when the non-AP MLD performs reception on the same link by using a second-type spatial stream. It may be represented as that PPDUs of all types can be received on the link in this case.

From a perspective of antenna, antenna capabilities of the EMLSR non-AP MLD are arranged as follows: One antenna is disposed on each of the two links. One antenna has a strong receiving capability, and it may be represented as that the antenna can receive PPDUs of all types. In this case, a single spatial stream generated by the antenna also has a strong receiving capability. The other antenna has a weak receiving capability, that is, only PPDUs of some types (for example, a non-HT duplicate type) can be received. In this case, a single spatial stream generated by the antenna also has a weak receiving capability. For ease of description, in this specification, an antenna with a strong receiving capability is referred to as a regular antenna (regular radio), and an antenna with a weak receiving capability is referred to as a limited antenna (reduced radio). It should be understood that the foregoing first-type spatial stream may be understood as a single spatial stream generated by a limited antenna, and the foregoing second-type spatial stream may be understood as a single spatial stream generated by a regular antenna.

Implementation 1.1: When the non-AP MLD performs reception on each link by using a single spatial stream, a spatial stream configuration is as follows: The non-AP MLD performs reception on the first link by using a first spatial stream (or a limited antenna), and performs reception on the second link by using a second spatial stream (or a regular antenna). The first spatial stream is a spatial stream of the first-type spatial stream, and the second spatial stream is a single spatial stream of the second-type single spatial stream. In other words, a receiving capability is limited when the non-AP MLD performs reception on the first link by using a first spatial stream (or a limited antenna), that is, only PPDUs of some types can be received. A receiving capability is not limited when the non-AP MLD performs reception on the second link by using a second spatial stream (or a regular antenna), that is, PPDUs of all types can be received. In a process in which the AP MLD and the non-AP MLD perform data transmission on the first link (which refers to a period of time from sending a data frame by the AP MLD to the non-AP MLD on the first link to TXOP termination), a spatial stream supported on the first link is multiple spatial streams, including a first spatial stream and a second spatial stream. In other words, within the TXOP, the spatial stream supported by the non-AP MLD on the first link is multiple spatial streams, including the first spatial stream and the second spatial stream. That is, within the TXOP, to ensure data transmission on the first link, the second spatial stream (or the regular antenna) originally configured for (or working on) the second link is temporarily switched to the first link for data transmission. Therefore, no spatial stream is supported on the second link of the non-AP MLD within the TXOP, that is, no receive antenna of the non-AP MLD works on the second link within the TXOP.

The foregoing first link (a link related to a current TXOP) and the foregoing second link (a link on which a next TBTT arrives) are not a same link. To successfully receive a beacon frame, after the TXOP termination, the non-AP MLD may change/switch a spatial stream on the second link to supporting beacon frame reception. For example, a second spatial stream (that is, a regular antenna) in multiple spatial streams (or multiple antennas) supported on the first link is switched to the second link to obtain a single spatial stream (or a single antenna). Therefore, to ensure that the non-AP MLD has sufficient time to complete spatial stream (or receive antenna) switching/changing between links, the first delay is a period of time taken by the non-AP MLD to change from supporting no spatial stream on the second link to supporting a single spatial stream, that is, the first delay is the EMLSR delay 2 defined above. Therefore, the spatial stream supported by the non-AP MLD on the second link is a single spatial stream at the next TBTT, and a receiving capability is not limited when the non-AP MLD performs reception on the second link by using the single spatial stream. In other words, a receive antenna of the non-AP MLD on the second link is a regular antenna at the next TBTT.

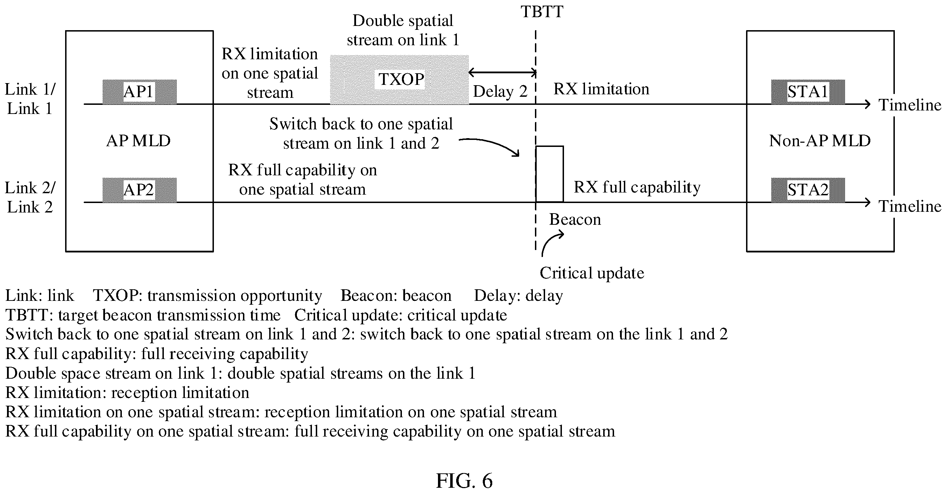

Refer to FIG. 6. FIG. 6 is a sequence diagram 1 of beacon frame transmission when receiving capabilities between links are asymmetric according to an embodiment of this application. As shown in FIG. 6, a current TXOP is on a link 1 (that is, the foregoing first link), and a next TBTT is to arrive on a link 2 (that is, the foregoing second link). Within the TXOP, a spatial stream (or a receive antenna) supported by a non-AP MLD on the link 1 is dual spatial streams (or dual antennas), including a single spatial stream with a limited receiving capability (or a limited antenna) and a single spatial stream with a receiving capability that is not limited (or a regular antenna). Therefore, to successfully receive a beacon frame, after the TXOP termination, the non-AP MLD may switch back to an original antenna configuration, that is, the non-AP MLD switches the single spatial stream with a receiving capability that is not limited/the regular antenna on the link 1 back to the link 2, to ensure that the non-AP MLD can successfully receive the beacon frame on the link 2. In this case, a TXOP holder (for example, an AP MLD) needs to terminate the TXOP within an EMLSR delay 2 (that is, the first delay) prior to the next TBTT, to ensure that the non-AP MLD has sufficient time to switch the single spatial stream with a receiving capability that is not limited/the regular antenna on the link 1 back to the link 2, to successfully receive the beacon frame at the next TBTT. A delay 2 in FIG. 6 represents the EMLSR delay 2.

Implementation 1.2: When the non-AP MLD performs reception on each link by using a single spatial stream, a spatial stream configuration is as follows: The non-AP MLD performs reception on the first link by using a second spatial stream (or a regular antenna), and performs reception on the second link by using a first spatial stream (or a limited antenna). The first spatial stream is a single spatial stream of the first-type single spatial stream, and the second spatial stream is a single spatial stream of the second-type single spatial stream. In other words, a receiving capability is not limited when the non-AP MLD performs reception on the first link by using a second spatial stream (or a regular antenna), that is, PPDUs of all types can be received. A receiving capability is limited when the non-AP MLD performs reception on the second link by using a first spatial stream (or a limited antenna), that is, only PPDUs of some types can be received. In a process in which the AP MLD and the non-AP MLD perform data transmission on the first link (which refers to a period of time from sending a data frame by the AP MLD to the non-AP MLD on the first link to TXOP termination), a spatial stream supported on the first link is multiple spatial streams, including a first spatial stream and a second spatial stream. In other words, within the TXOP, the spatial stream supported by the non-AP MLD on the first link is multiple spatial streams, including the first spatial stream and the second spatial stream. That is, within the TXOP, to ensure multi-stream data transmission on the first link, the first spatial stream (or the limited antenna) originally configured for (or working on) the second link is temporarily switched to the first link for data transmission. Therefore, no spatial stream is supported on the second link of the non-AP MLD within the TXOP, that is, no receive antenna of the non-AP MLD works on the second link within the TXOP.

The foregoing first link (a link related to a current TXOP) and the foregoing second link (a link on which a next TBTT arrives) are not a same link. To successfully receive a beacon frame, the non-AP MLD needs to change/switch a spatial stream on the second link to supporting beacon frame reception.

In an implementation, after the TXOP termination, the non-AP MLD may switch the second spatial stream (that is, the regular antenna) in the multiple spatial streams (or multiple antennas) supported on the first link to the second link to obtain a single spatial stream (or a single antenna), and the first spatial stream (that is, the limited antenna) is maintained on the first link. Therefore, to ensure that the non-AP MLD has sufficient time to complete spatial stream (or receive antenna) switching/changing between links, the first delay is a period of time taken by the non-AP MLD to change from supporting no spatial stream on the second link to supporting a single spatial stream, that is, the first delay is the EMLSR delay 2 defined above. Therefore, the spatial stream supported by the non-AP MLD on the second link is a single spatial stream at the next TBTT, and a receiving capability is not limited when the non-AP MLD performs reception on the second link by using the single spatial stream. In other words, a receive antenna of the non-AP MLD on the second link is a regular antenna at the next TBTT.

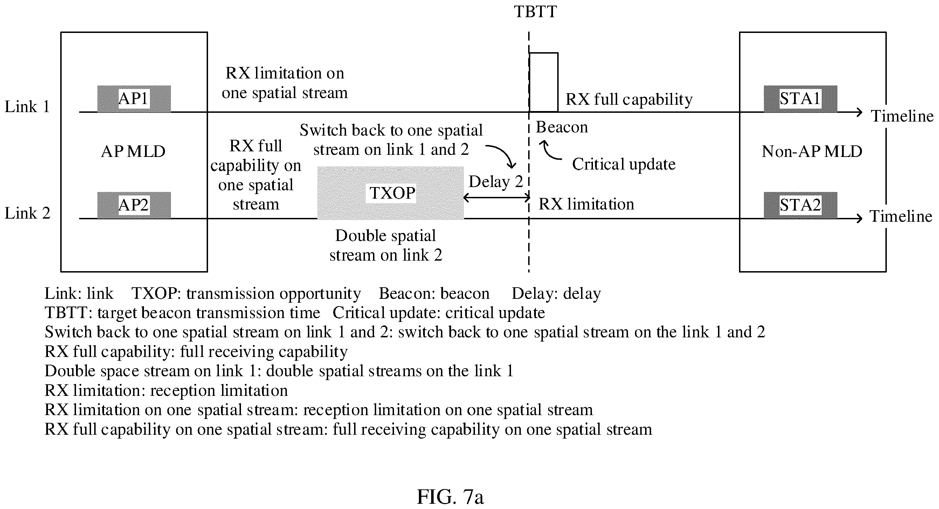

Refer to FIG. 7a. FIG. 7a is a sequence diagram 2 of beacon frame transmission when receiving capabilities between links are asymmetric according to an embodiment of this application. As shown in FIG. 7a, a current TXOP is on a link 2 (that is, the foregoing first link), and a next TBTT is to arrive on a link 1 (that is, the foregoing second link). Within the TXOP, a spatial stream (or a receive antenna) supported by a non-AP MLD on the link 2 (that is, the foregoing first link) is dual spatial streams (or dual antennas), including a single spatial stream with a limited receiving capability (or a limited antenna) and a single spatial stream with a receiving capability that is not limited (or a regular antenna). Therefore, to successfully receive a beacon frame, after the TXOP termination, the non-AP MLD may choose to switch the single spatial stream with a receiving capability that is not limited/the regular antenna on the link 2 (that is, the foregoing first link) to the link 1 (that is, the second link), to ensure that the non-AP MLD can successfully receive the beacon frame on the link 1 (that is, the second link). The single spatial stream with a limited receiving capability/the limited antenna is maintained on the link 2 (that is, the first link). In this case, a TXOP holder (for example, an AP MLD) needs to terminate the TXOP within an EMLSR delay 2 (that is, the first delay) prior to the next TBTT, to ensure that the non-AP MLD has sufficient time to switch the single spatial stream with a receiving capability that is not limited/the regular antenna on the link 2 to the link 1, to successfully receive the beacon frame at the next TBTT. A delay 2 in FIG. 7a represents the EMLSR delay 2.

In another implementation, after the TXOP termination, the non-AP MLD may switch all multiple spatial streams (or multiple antennas) supported on the first link to the second link to obtain multiple spatial streams (or multiple antennas). Therefore, to ensure that the non-AP MLD has sufficient time to complete spatial stream (or receive antenna) switching/changing between links, the first delay is a period of time taken by the non-AP MLD to change from supporting no spatial stream on the second link to supporting multiple spatial streams (or multiple antennas), that is, the first delay is the EMLSR delay 3 defined above. Therefore, the spatial stream supported by the non-AP MLD on the second link is multiple spatial streams at the next TBTT, including a first spatial stream and a second spatial stream. In other words, a receive antenna of the non-AP MLD on the second link is multiple antennas at the next TBTT, including a regular antenna and a limited antenna.

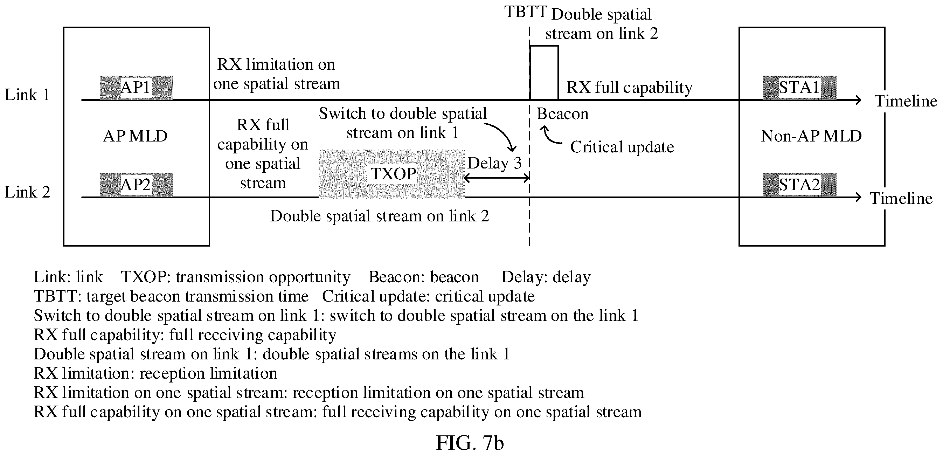

Refer to FIG. 7b. FIG. 7b is a sequence diagram 3 of beacon frame transmission when receiving capabilities between links are asymmetric according to an embodiment of this application. As shown in FIG. 7b, a current TXOP is on a link 2 (that is, the foregoing first link), and a next TBTT is to arrive on a link 1 (that is, the foregoing second link). Within the TXOP, a spatial stream (or a receive antenna) supported by a non-AP MLD on the link 2 (that is, the foregoing first link) is dual spatial streams (or dual antennas), including a single spatial stream with a limited receiving capability (or a limited antenna) and a single spatial stream with a receiving capability that is not limited (or a regular antenna). Therefore, to successfully receive a beacon frame, after the TXOP termination, a non-AP MLD may choose to directly switch the dual spatial streams (or the dual antennas) on the link 2 to the link 1, to ensure that the non-AP MLD can successfully receive the beacon frame on the link 1. In this case, a TXOP holder (for example, an AP MLD) needs to terminate the TXOP within an EMLSR delay 3 (that is, the first delay) prior to the next TBTT, to ensure that the non-AP MLD can have sufficient time to switch the dual spatial streams (or the dual antennas) on the link 2 to the link 1, to successfully receive the beacon frame at the next TBTT. A delay 3 in FIG. 7b represents the EMLSR delay 3.

Implementation 1.3: When the non-AP MLD performs reception on each link by using a single spatial stream, a spatial stream configuration is as follows: The non-AP MLD performs reception on the first link by using a second spatial stream (or a regular antenna), and performs reception on the second link by using a first spatial stream (or a limited antenna). The first spatial stream is a single spatial stream of the first-type single spatial stream, and the second spatial stream is a single spatial stream of the second-type single spatial stream. In other words, a receiving capability is not limited when the non-AP MLD performs reception on the first link by using a second spatial stream (or a regular antenna), that is, PPDUs of all types can be received. A receiving capability is limited when the non-AP MLD performs reception on the second link by using a first spatial stream (or a limited antenna), that is, only PPDUs of some types can be received. In a process in which the AP MLD and the non-AP MLD perform data transmission on the first link (which refers to a period of time from sending a data frame by the AP MLD to the non-AP MLD on the first link to TXOP termination), a spatial stream supported on the first link is a second spatial stream. In other words, within the TXOP, a spatial stream supported by the non-AP MLD on the first link is a single spatial stream. Therefore, a spatial stream supported on the second link of the non-AP MLD within the TXOP is a single spatial stream, while the receiving capability is limited when the non-AP MLD performs reception on the second link by using the single spatial stream. In other words, a limited antenna of the non-AP MLD works on the second link within the TXOP.

The foregoing first link (a link related to a current TXOP) and the foregoing second link (a link on which a next TBTT arrives) are not a same link. To successfully receive a beacon frame, the non-AP MLD may change/switch a spatial stream on the second link to supporting beacon frame reception. For example, the second spatial stream (or the regular antenna) supported on the first link is switched to the second link, to form multiple spatial streams (or multiple antennas) with the original first spatial stream (or limited antenna) on the second link. Therefore, to ensure that the non-AP MLD has sufficient time to complete spatial stream (or receive antenna) switching/changing between links, the first delay is a period of time taken by the non-AP MLD to change a spatial stream supported on the second link from a single spatial stream to multiple spatial streams, that is, the first delay is the EMLSR delay 1 defined above. Therefore, the spatial stream supported by the non-AP MLD on the second link is multiple spatial streams at the next TBTT, including a first spatial stream and a second spatial stream. In other words, a receive antenna of the non-AP MLD on the second link is dual antennas at the next TBTT, including a regular antenna and a limited antenna.

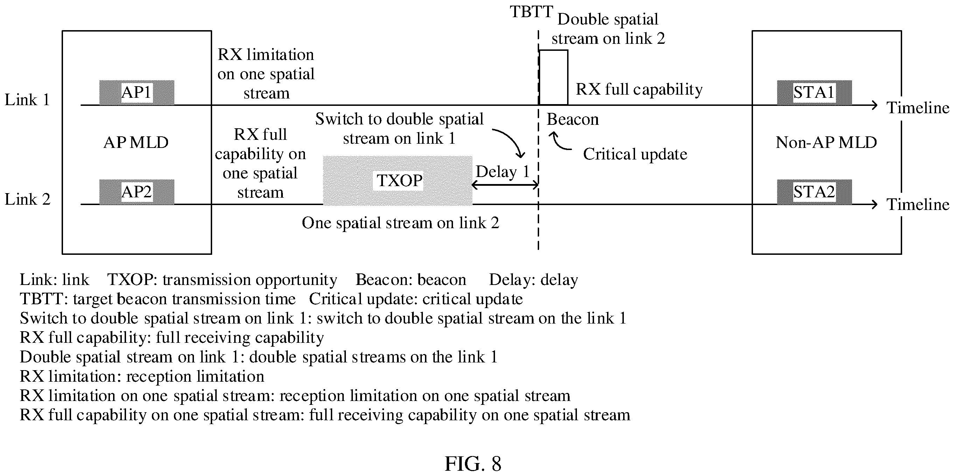

Refer to FIG. 8. FIG. 8 is a sequence diagram 4 of beacon frame transmission when receiving capabilities between links are asymmetric according to an embodiment of this application. When the non-AP MLD performs reception on each link by using a single spatial stream, a spatial stream configuration is as follows: The non-AP MLD performs reception on the first link by using a second single spatial stream (or a regular antenna). Therefore, after obtaining a TXOP on the first link, the AP MLD may not send an initial control frame on the first link, but directly sends a single-stream data frame. As shown in FIG. 8, in a TXOP, a non-AP MLD receives a single-stream data frame on a link 2 (that is, the foregoing first link) by using a single spatial stream with a receiving capability that is not limited (or a regular antenna). A next TBTT is to arrive on a link 1 (that is, the foregoing second link). To successfully receive a beacon frame, after the TXOP termination, the non-AP MLD may choose to switch the single spatial stream with a receiving capability that is not limited/the regular antenna on the link 2 to the link 1, to form dual spatial streams (or dual antennas) with the original single spatial stream with a limited receiving capability/limited antenna on the link 1, to ensure that the non-AP MLD can successfully receive the beacon frame on the link 1. In this case, a TXOP holder (for example, an AP MLD) needs to terminate the TXOP within an EMLSR delay 1 (that is, the first delay) prior to the next TBTT, to ensure that the non-AP MLD can have sufficient time to switch the single spatial stream with a receiving capability that is not limited/the regular antenna on the link 2 to the link 1, to successfully receive the beacon frame at the next TBTT. A delay 1 in FIG. 8 represents the EMLSR delay 1.

### 2. Receiving capabilities between links are symmetric

Optionally, in this embodiment of this application, a receiving capability of the EMLSR non-AP MLD on each link is symmetric. To be specific, a receiving capability is limited when the non-AP MLD performs reception on a link by using a single spatial stream (or a single antenna), or a receiving capability of the non-AP MLD is weak when each single spatial stream (or each antenna) of the non-AP MLD is used separately, that is, only PPDUs of some types can be received. In this case, the non-AP MLD cannot receive a beacon frame by using a single spatial stream (or a single antenna).

Optionally, because a receiving capability is limited when the non-AP MLD performs reception on each link by using a single spatial stream, in a process in which the AP MLD and the non-AP MLD perform data transmission on the first link (which refers to a period of time from sending a data frame by the AP MLD to the non-AP MLD on the first link to TXOP termination), a spatial stream (or a receive antenna) supported on the first link is multiple spatial streams (or multiple antennas). In other words, within the TXOP, to ensure data transmission on the first link, a single spatial stream (or a limited antenna) originally configured for (or working on) the second link is temporarily switched to the first link for data transmission. Therefore, no spatial stream is supported on the second link of the non-AP MLD within the TXOP, that is, no receive antenna of the non-AP MLD works on the second link within the TXOP.

However, to successfully receive a beacon frame, after the TXOP termination, the non-AP MLD may change/switch a spatial stream on the second link to supporting beacon frame reception. For example, all multiple spatial streams (or multiple antennas) supported on the first link are switched to the second link to obtain multiple spatial streams (or multiple antennas). Therefore, to ensure that the non-AP MLD has sufficient time to complete spatial stream (or receive antenna) switching/changing between links, the first delay is a period of time taken by the non-AP MLD to change from supporting no spatial stream on the second link to supporting multiple spatial streams, that is, the first delay is the EMLSR delay 3 defined above. Therefore, the spatial stream (or the receive antenna) supported by the non-AP MLD on the second link is multiple spatial streams (or multiple antennas) at a next TBTT.

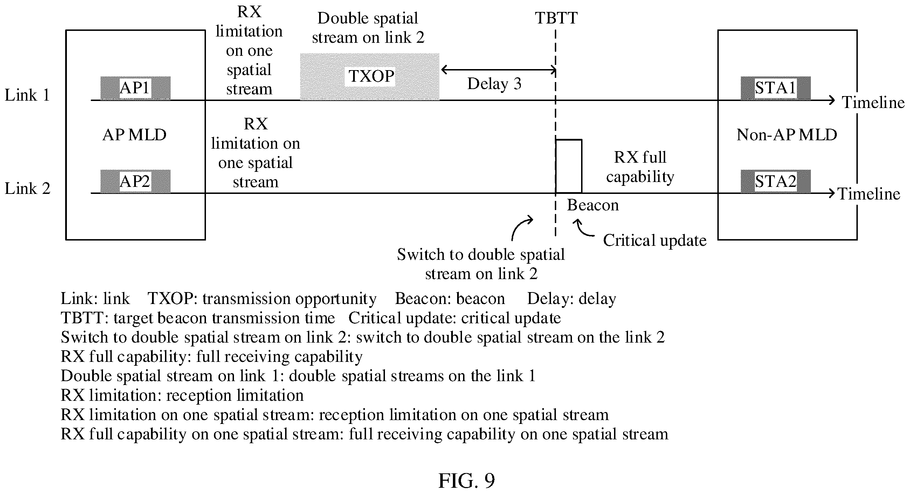

Refer to FIG. 9. FIG. 9 is a sequence diagram of beacon frame transmission when receiving capabilities between links are symmetric according to an embodiment of this application. As shown in FIG. 9, a current TXOP is on a link 1 (that is, the foregoing first link), and a next TBTT is to arrive on a link 2 (that is, the foregoing second link). Within the TXOP, a spatial stream (or a receive antenna) supported by the non-AP MLD on the link 1 (that is, the foregoing first link) is dual spatial streams (or dual antennas), including two single spatial streams with limited receiving capabilities (or two limited antennas). Therefore, to successfully receive a beacon frame, after the TXOP termination, a non-AP MLD may switch both the dual spatial streams (or the dual antennas) on the link 1 to the link 2, to ensure that the non-AP MLD can successfully receive the beacon frame on the link 2. In this case, a TXOP holder (for example, an AP MLD) needs to terminate the TXOP within an EMLSR delay 3 (that is, the first delay) prior to the next TBTT, to ensure that the non-AP MLD can have sufficient time to switch both the dual spatial streams (or dual antennas) on the link 1 to the link 2, to successfully receive the beacon frame at the next TBTT. A delay 3 in FIG. 9 represents the EMLSR delay 3.

It can be learned that in this embodiment of this application, in two scenarios in which receiving capabilities between links are symmetric and asymmetric when a non-AP MLD performs reception by using a single spatial stream (or a single antenna), impact of an EMLSR switching delay on beacon frame reception is separately considered, and a TXOP holder is restricted to terminate a TXOP before an EMLSR switching delay (that is, the first delay) prior to a next TBTT, to ensure that the non-AP MLD has sufficient time to complete spatial stream switching/changing. This can prevent the non-AP MLD in the EMLSR mode from missing an important beacon frame.

In an optional embodiment, a link related to a current TXOP and a link for sending a beacon frame at a next TBTT may be a same link. A first link exists between an EMLSR non-AP MLD and a TXOP holder AP MLD. Specifically, it is assumed that a link related to a current TXOP and a link for sending a beacon frame at a next TBTT are the first link. That is, the AP MLD obtains a TXOP on the first link through channel contention, and the AP MLD is to send a beacon frame on the first link at a next TBTT. After obtaining the TXOP, the AP MLD performs data transmission with the EMLSR non-AP MLD on the first link within the TXOP. The AP MLD sends a first frame on the first link prior to the next TBTT, where the first frame indicates TXOP termination (TXOP termination) on the first link. Correspondingly, the non-AP MLD receives the first frame on the first link prior to the next TBTT, and maintains a spatial stream supported on the first link, or does not change a spatial stream supported on the first link. The AP MLD sends a beacon frame on the first link at the next TBTT. Correspondingly, the non-AP MLD receives the beacon frame by using a spatial stream currently supported on the first link at the next TBTT. If a receiving capability is not limited when the non-AP MLD performs reception on the first link by using a single spatial stream (that is, PPDUs of all types can be received), the spatial stream supported on the first link may be the single spatial stream. Alternatively, the spatial stream supported on the first link is multiple spatial streams. In other words, if a link related to a current TXOP and a link for sending a beacon frame at a next TBTT are the same link, the non-AP MLD may maintain a current spatial stream on the link. That is, the spatial stream supported on the link is not changed after the TXOP termination.

Optionally, estimated time of TXOP termination should be prior to the next TBTT, and a time interval between the estimated time of TXOP termination and the next TBTT should be less than or equal to a threshold, for example, 64 µs or 128 µs.

It can be seen that, because a link related to a current TXOP and a link for sending a beacon frame at a next TBTT are the same link, the non-AP MLD maintains a current spatial stream, and can successfully receive a beacon frame at a next TBTT. This can prevent the non-AP MLD in the EMLSR mode from missing an important beacon frame.

In another optional embodiment, when a link related to a current TXOP and a link for sending a beacon frame at a next TBTT are a same link, and a spatial stream (or a receive antenna) on the link is a single spatial stream (or a single antenna), a single-stream data frame sent by the AP MLD may serve as an initial control frame. That is, after receiving the single-stream data frame, the non-AP MLD may alternatively change a spatial stream supported on the link from a single spatial stream (or a single antenna) to multiple spatial streams (or multiple antennas), and then performs reception by using the multiple spatial streams (or multiple antennas). It should be noted that the single-stream data frame needs to be lengthened through padding in this case. Specifically, the AP MLD obtains a TXOP on the first link through channel contention, and performs data transmission with the EMLSR non-AP MLD on the first link within the TXOP. The AP MLD is to send a beacon frame on the first link at a next TBTT, and a spatial stream (or a receive antenna) supported by the non-AP MLD on the first link is a single spatial stream (or a single antenna). The AP MLD sends the single-stream data frame lengthened through padding prior to the next TBTT, where the single-stream data frame indicates the non-AP MLD to change the spatial stream (or the receive antenna) on the first link. Correspondingly, after receiving the single-stream data frame, the non-AP MLD changes the spatial stream supported on the first link from a single spatial stream to multiple spatial streams (or multiple antennas). The AP MLD sends a beacon frame on the first link at the next TBTT. Correspondingly, the non-AP MLD receives the beacon frame by using a spatial stream currently supported on the first link at the next TBTT. A sending delay of the single-stream data frame lengthened through padding should be greater than or equal to a period of time taken by the non-AP MLD to change the spatial stream supported on the first link from a single spatial stream (or a single antenna) to multiple spatial streams (or multiple antennas). In other words, within transmission time of the single-stream data frame, the non-AP MLD needs to complete changing/switching the spatial stream (or the receive antenna) supported on the first link.

It can be learned that in this embodiment of this application, when a link related to a current TXOP and a link on which a next TBTT arrives are a same link, another feasible manner of beacon frame reception is provided.

### Embodiment 2

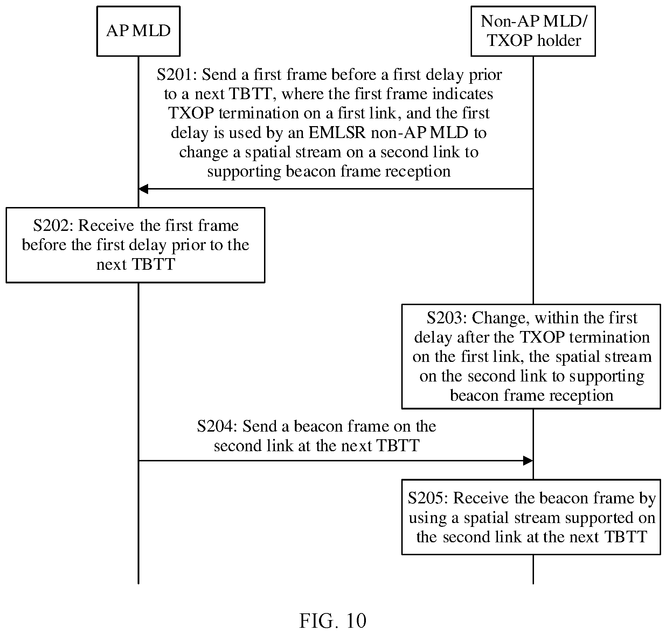

Embodiment 2 of this application mainly describes how to transmit a beacon frame between an AP MLD and a non-AP MLD in an EMLSR mode when the non-AP MLD serves as a TXOP holder, to prevent the non-AP MLD in the EMLSR mode from missing an important beacon frame. Refer to FIG. 10. FIG. 10 is another schematic flowchart of a beacon frame transmission method in an EMLSR mode according to an embodiment of this application. As shown in FIG. 10, the beacon frame transmission method in the EMLSR mode includes but is not limited to the following steps.

S201: A TXOP holder (non-AP MLD) sends a first frame before a first delay prior to a next TBTT, where the first frame indicates TXOP termination on a first link, and the first delay is used by the EMLSR non-AP MLD to change a spatial stream on a second link to supporting beacon frame reception.

S202: An AP MLD receives the first frame before the first delay prior to the next TBTT.

S203: The non-AP MLD changes, within the first delay after the TXOP termination on the first link, a spatial stream on the second link to supporting beacon frame reception.

S204: The AP MLD sends a beacon frame on the second link at the next TBTT.

S205: The non-AP MLD receives the beacon frame by using a spatial stream supported on the second link at the next TBTT.

Optionally, a first link and a second link exist between a TXOP holder non-AP MLD and an AP MLD. The EMLSR non-AP MLD obtains a TXOP on the first link through channel contention, and performs data transmission with the AP MLD on the first link within the TXOP. For details about how the EMLSR non-AP MLD performs autonomous channel contention and how to send uplink non-trigger-based data, refer to the following description in Embodiment 4. Details are not described herein. Alternatively, after obtaining a TXOP on the first link through channel contention, the AP MLD transfers the TXOP to the non-AP MLD. In this case, the non-AP MLD is a TXOP holder after the TXOP is transferred. If the non-AP MLD determines that the AP MLD is to send a beacon frame on the second link at a next TBTT, and the second link and a link (that is, the foregoing first link) related to the current TXOP are not a same link, the non-AP MLD sends a first frame before a first delay prior to the next TBTT. Herein, a STA on the link (that is, the first link) related to the TXOP needs to know a TSF on another link, to determine a link on which the next TBTT is located. The first frame indicates TXOP termination (TXOP termination) on the first link. The first frame may be a control frame, such as a CF-end frame or a CTS-to-self frame. Correspondingly, the AP MLD receives the first frame before the first delay prior to the next TBTT. The non-AP MLD changes, within the first delay after the TXOP termination on the first link, a spatial stream on the second link to supporting beacon frame reception. In other words, the non-AP MLD needs to complete changing the spatial stream on the second link in a period of time from the TXOP termination on the first link to the next TBTT. Alternatively, the period of time taken by the non-AP MLD to change the spatial stream to supporting beacon frame reception should be shorter than or equal to the first delay. The AP MLD sends a beacon frame on the second link at the next TBTT. Correspondingly, the non-AP MLD receives the beacon frame by using a spatial stream currently supported on the second link at the next TBTT. It should be understood that, prior to the next TBTT, the non-AP MLD has changed a spatial stream supported on the second link. Therefore, the non-AP MLD may successfully receive the beacon frame at the next TBTT. The first delay is used by the EMLSR non-AP MLD to change a spatial stream on the second link to supporting beacon frame reception.

Optionally, the first delay may be further described as: the first delay is used by the EMLSR non-AP MLD to switch a receive antenna on the second link to supporting beacon frame reception.

In this application, a "next TBTT" is a TBTT after and closest to a TXOP in terms of time.

It should be understood that the first link and the second link in this embodiment of this application are two different links between the AP MLD and the EMLSR non-AP MLD. In actual application, there may be more links (more than two links) between the non-AP MLD and the AP MLD. The first link represents a link related to a current TXOP in a plurality of links between the non-AP MLD and the AP MLD, and the second link represents a link on which a next TBTT arrives in the plurality of links between the non-AP MLD and the AP MLD.

Optionally, when the non-AP MLD performs reception on both the first link and the second link by using a single spatial stream (or a single antenna), a receiving capability on one link is limited (that is, only PPDUs of some types (that is, the OFDM type and the non-HT duplicate type) can be received), and a receiving capability on the other link is not limited (that is, PPDUs of all types can be received). Alternatively, when the non-AP MLD performs reception on both the first link and the second link by using a single spatial stream (or a single antenna), receiving capabilities on both the two links are limited (that is, only PPDUs of some types can be received).

Optionally, the first delay may be one of the EMLSR delay 1, the EMLSR delay 2, and the EMLSR delay 3 defined in Embodiment 1. For details, refer to corresponding descriptions in Embodiment 1. Details are not described herein again. For a specific implementation of the first delay, refer to corresponding descriptions in Embodiment 1. Details are not described herein again.

It can be learned that in this embodiment of this application, in two scenarios in which receiving capabilities between links are symmetric and asymmetric when a non-AP MLD performs reception by using a single spatial stream (or a single antenna), impact of an EMLSR switching delay on beacon frame reception is separately considered, and a TXOP holder is restricted to terminate a TXOP before an EMLSR switching delay (that is, the first delay) prior to a next TBTT, to ensure that the non-AP MLD has sufficient time to complete spatial stream (or receive antenna) switching/changing. This can prevent the non-AP MLD in the EMLSR mode from missing an important beacon frame.

In an optional embodiment, a link related to a current TXOP and a link for sending a beacon frame at a next TBTT may be a same link. A first link exists between a TXOP holder non-AP MLD and an AP MLD, and the non-AP MLD is in an EMLSR mode. Specifically, it is assumed that a link related to a current TXOP and a link for sending a beacon frame at a next TBTT are the first link. The TXOP holder non-AP MLD sends a first frame on the first link prior to the next TBTT, where the first frame indicates TXOP termination (TXOP termination) on the first link. Then, the non-AP MLD maintains a spatial stream supported on the first link, or does not change a spatial stream supported on the first link. The AP MLD sends a beacon frame on the first link at the next TBTT. Correspondingly, the non-AP MLD receives the beacon frame by using a spatial stream currently supported on the first link at the next TBTT. If a receiving capability is not limited when the non-AP MLD performs reception on the first link by using a single spatial stream (that is, PPDUs of all types can be received), the spatial stream supported on the first link may be the single spatial stream. Alternatively, the spatial stream supported on the first link is multiple spatial streams. In other words, if a link related to a current TXOP and a link for sending a beacon frame at a next TBTT are the same link, the non-AP MLD may maintain a current spatial stream on the link. That is, the spatial stream supported on the link is not changed after the TXOP termination. Optionally, estimated time of TXOP termination should be prior to the next TBTT, and a time interval between the estimated time of TXOP termination and the next TBTT should be less than or equal to a threshold, for example, 64 µs or 128 µs.

It can be seen that, because a link related to a current TXOP and a link for sending a beacon frame at a next TBTT are the same link, the non-AP MLD maintains a current spatial stream, and can successfully receive a beacon frame at a next TBTT. This can prevent the non-AP MLD in the EMLSR mode from missing an important beacon frame.

### Embodiment 3

Embodiment 3 of this application mainly describes a link capability indication method when receiving capabilities between links of a non-AP MLD in an EMLSR mode are asymmetric.

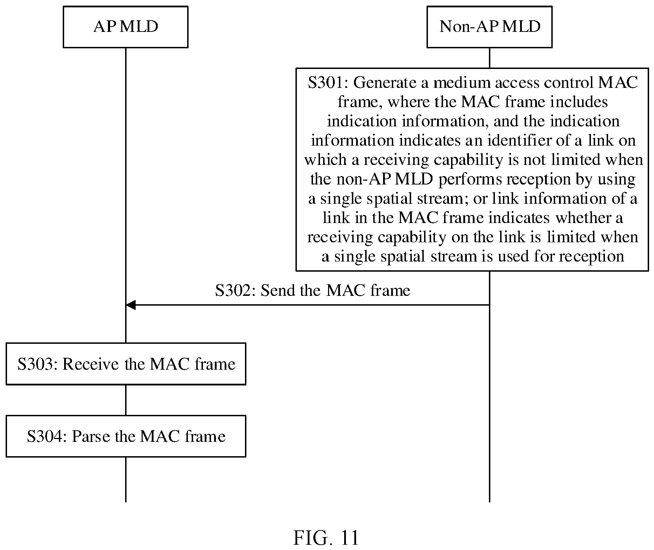

Refer to FIG. 11. FIG. 11 is a schematic flowchart of a link capability indication method in an EMLSR mode according to an embodiment of this application. As shown in FIG. 11, the link capability indication method in the EMLSR mode includes but is not limited to the following steps. S301: A non-AP MLD generates a medium access control MAC frame, where the MAC frame includes indication information, and the indication information indicates an identifier of a link on which a receiving capability is not limited when the non-AP MLD performs reception by using a single spatial stream; or link information of a link in the MAC frame indicates whether a receiving capability on the link is limited when a single spatial stream is used for reception.

S302: The non-AP MLD sends the MAC frame.

Optionally, in this embodiment of this application, when the EMLSR non-AP MLD performs reception by using a single spatial stream (or a single antenna), receiving capabilities between links (or antennas) are asymmetric. From a perspective of spatial stream, the EMLSR non-AP MLD includes two types of spatial streams: a first-type spatial stream and a second-type spatial stream. A receiving capability is limited when the non-AP MLD performs reception on a link by using a first-type spatial stream. It may be represented as that only PPDUs of some types (for example, a non-HT duplicate type) can be received on the link in this case. A receiving capability is not limited when the non-AP MLD performs reception on the same link by using a second-type spatial stream. It may be represented as that PPDUs of all types can be received on the link in this case. From a perspective of antenna, the EMLSR non-AP MLD disposes one antenna on each of the two links. One antenna has a strong receiving capability, which may be represented as that the antenna can receive PPDUs of all types. The other antenna has a weak receiving capability, that is, can receive only PPDUs of some types (for example, a non-HT duplicate type).

Therefore, the non-AP MLD may report an antenna condition or a link capability of the non-AP MLD to the AP MLD. For ease of description, in this specification, an antenna with a strong receiving capability is referred to as a regular antenna (regular radio), and an antenna with a weak receiving capability is referred to as a limited antenna (reduced radio). It should be understood that the foregoing first-type spatial stream may be understood as a single spatial stream generated by a limited antenna, and the foregoing second-type spatial stream may be understood as a single spatial stream generated by a regular antenna. It should be further understood that, for ease of description, in this specification, when a non-AP MLD performs reception on each link by using a single spatial stream (or a single antenna), a link on which a regular antenna (or a second-type single spatial stream) is located is referred to as a full receiving capability link (RX full capability link), and a link on which a limited antenna (or a first-type single spatial stream) is located is referred to as a limited receiving capability link (RX limitation link). It should be further understood that the full receiving capability link and the limited receiving capability link are not fixed, and the full receiving capability link changes with switching of a regular antenna (or a second-type single spatial stream) between links. For example, in a period of time from T1 to T2, a regular antenna (or a second-type single spatial stream) works on a link 1, and the link 1 may be referred to as a full receiving capability link. In a period of time from T2 to T3, if the regular antenna (or the second-type single spatial stream) is switched to a link 2 to work, the link 2 may be referred to as a full receiving capability link.

Optionally, the non-AP MLD reports a link capability of the non-AP MLD by using indication information in the MAC frame. Specifically, the indication information may indicate an identifier of a link (that is, a full receiving capability link) on which a receiving capability is not limited when the non-AP MLD performs reception by using a single spatial stream. Alternatively, the indication information is carried in link information of a link in the MAC frame, to indicate whether a receiving capability on the link is limited when the non-AP MLD performs reception by using a single spatial stream. The following separately describes several possible implementations of the indication information.

In a first implementation, the indication information is located in an EHT MAC capabilities information field (EHT MAC capabilities information field) of the MAC frame, and a length of the indication information may be 1 bit. The EHT MAC capabilities information field is designed for a single STA. Therefore, when 1 bit is added to the EHT MAC capabilities information field to carry the indication information, the indication information indicates whether a receiving capability on a link corresponding to the EHT MAC capabilities information field is limited, or indicates whether a link corresponding to the EHT MAC capabilities information field has a full receiving capability.

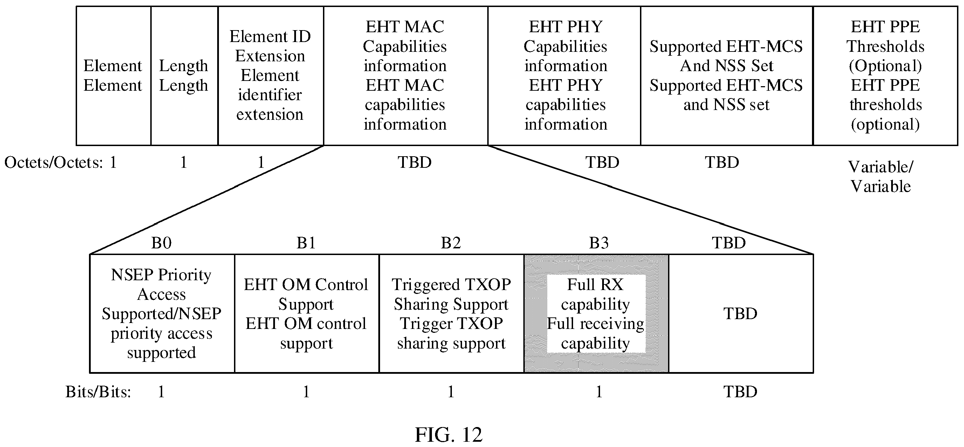

Refer to FIG. 12. FIG. 12 is a schematic diagram of a frame format of an EHT MAC capabilities information field according to an embodiment of this application. As shown in FIG. 12, the EHT MAC capabilities information field includes a full receiving capability field (full RX capability), and may further include another field in FIG. 12. The full receiving capability field (that is, the foregoing indication information) is 1 bit in length, to indicate whether a receiving capability is limited or whether the link is a full receiving capability link. For example, when a value of the full receiving capability field is 1, it indicates that the receiving capability is not limited or the link is a full receiving capability link; and when a value of the full receiving capability field is 0, it indicates that the receiving capability is limited or the link is not a full receiving capability link. Contrarily, when a value of the full receiving capability field is 0, it indicates that the receiving capability is not limited or the link is a full receiving capability link; and when a value of the full receiving capability field is 1, it indicates that the receiving capability is limited or the link is not a full receiving capability link.

It should be understood that the name, the length, and the arrangement order of the full receiving capability field in the EHT MAC capabilities information field in FIG. 12 are merely examples. This is not limited in this embodiment of this application.

It can be seen that the EHT MAC capabilities information field is usually carried in an association (association) process, and a bit value of the field does not change greatly after a chip is delivered from a factory, that is, a capability is relatively fixed after delivery, this manner is relatively static during implementation.

In a second implementation, the indication information is located in a per-STA profile (per STA Profile) of a multi-link element (Multi-Link Element) of the MAC frame, and may be specifically located in a STA control field (STA Control field) of the per-STA profile. A length of the indication information may be 1 bit. A per-STA profile includes information about a link. Therefore, when 1 bit is added to the STA control field of the per-STA profile to carry the indication information, the indication information indicates whether a receiving capability on a link corresponding to the per-STA profile is limited, or indicates whether a link corresponding to the per-STA profile is a full receiving capability link.

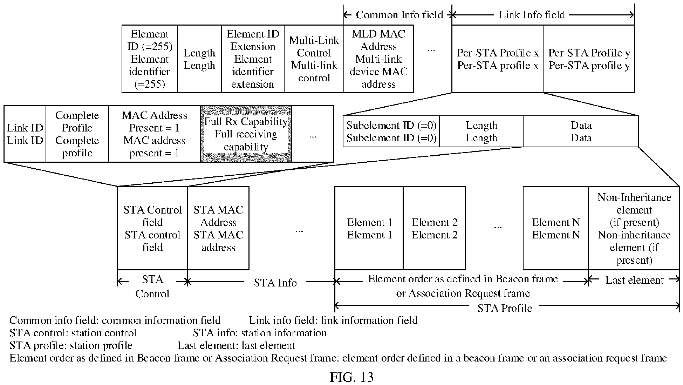

Refer to FIG. 13. FIG. 13 is a schematic diagram of a frame format of a STA control field according to an embodiment of this application. As shown in FIG. 13, the STA control field includes a full receiving capability field (full RX capability), and may further include another field in FIG. 13. The full receiving capability field (that is, the foregoing indication information) is 1 bit in length, to indicate whether a receiving capability is limited. For example, when a value of the full receiving capability field is 1, it indicates that the receiving capability is not limited; and when a value of the full receiving capability field is 0, it indicates that the receiving capability is limited. Contrarily, when a value of the full receiving capability field is 0, it indicates that the receiving capability is not limited; and when a value of the full receiving capability field is 1, it indicates that the receiving capability is limited.

It should be understood that the name, the length, and the arrangement order of the full receiving capability field in the STA control field in FIG. 13 are merely examples. This is not limited in this embodiment of this application.

In a third implementation, the indication information is located in a common information field of a multi-link element (Multi-Link Element) of the MAC frame, and may be specifically located in an enhanced multi-link (enhanced Multi-Link, EML) capabilities field of the common information field, to indicate an identifier of a link (or a full receiving capability link) on which a receiving capability is not limited when the non-AP MLD performs reception by using a single spatial stream. A length of the indication information may be 4 bit.

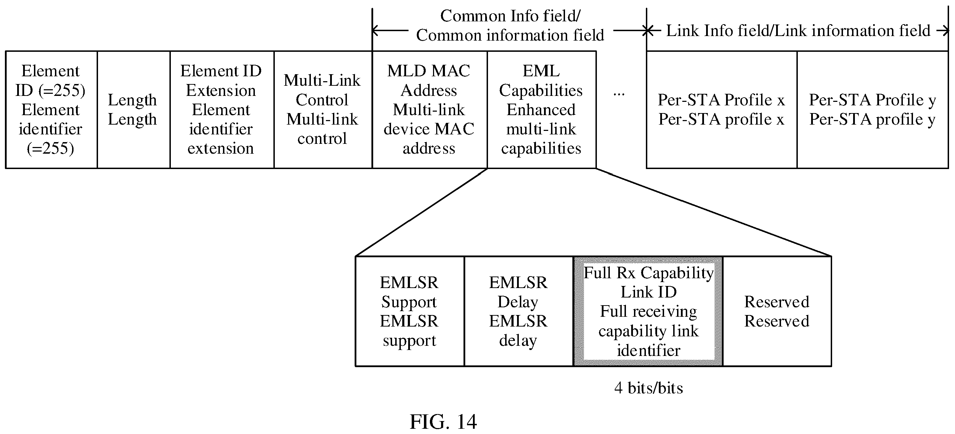

Refer to FIG. 14. FIG. 14 is a schematic diagram of a frame format of an EML capabilities field according to an embodiment of this application. As shown in FIG. 14, the EML capabilities field includes a full receiving capability link identifier field (full RX capability link ID), and may further include another field in FIG. 14. A length of the full receiving capability link identifier field (the foregoing indication information) is 4 bits, to indicate an identifier of a link (or a full receiving capability link) on which a receiving capability is not limited in a 1 × 1 antenna configuration.

It should be understood that the name, the length, and the arrangement order of the full receiving capability link identifier field in the EML capabilities field in FIG. 14 are merely examples. This is not limited in this embodiment of this application.

It can be learned that, in this implementation, the identifier of the link on which a receiving capability is not limited is directly indicated by using 4 bits in the common information field of the multi-link element (Multi-Link Element). When there are many links between the non-AP MLD and the AP MLD, bit overheads can be reduced to some extent.

Optionally, the full receiving capability link identifier field in FIG. 14 can indicate only one link (that is, one full receiving capability link) on which a receiving capability is not limited. If a plurality of links on which receiving capabilities are not limited need to be indicated, a bitmap manner may be used for indication. For example, in an 8-bit or 16-bit link bitmap, if a receiving capability on a link identified by a link ID is not limited when a single spatial stream is used for reception, a bit corresponding to the link ID is set to 1. Otherwise, a bit corresponding to the link ID is set to 0, that is, if a receiving capability on a link identified by a link ID is limited when a single spatial stream is used for reception, a bit corresponding to the link ID is set to 0. Alternatively, the link bitmap is set according to a sequence of per-STA profiles in a link information field (link information field). For example, the first bit of the link bitmap corresponds to the first per-STA profile in the link information field, the second bit of the link bitmap corresponds to the second per-STA profile in the link information field, the third bit of the link bitmap corresponds to the third per-STA profile in the link information field, and so on. If a receiving capability on a link corresponding to a per-STA profile is not limited when a single spatial stream is used for reception, a bit in the link bitmap corresponding to a location of the per-STA profile is set to 1. For example, if a receiving capability on a link corresponding to the fifth per-STA profile is not limited when a single spatial stream is used for reception, the fifth bit in the link bitmap is set to 1.

It can be learned that, the bitmap is added to the common information field of the multi-link element, so that a plurality of links on which receiving capabilities are not limited can be indicated. When the non-AP MLD has a plurality of links on which receiving capabilities are not limited, bit overheads can be reduced to some extent. For example, there are five links between the non-AP MLD and the AP MLD, and receiving capabilities on two links are not limited when a single spatial stream is used for reception. In this case, only a 5-bit bitmap needs to be added to the common information field of the multi-link element, and identifiers of the two links do not need to be separately indicated by using 8 bits.

S303: The AP MLD receives the MAC frame.

S304: The AP MLD parses the MAC frame.

Optionally, the AP MLD receives the MAC frame, and parses the MAC to obtain the indication information in the MAC frame. A link on which a receiving capability is not limited when the non-AP MLD performs reception by using a single spatial stream for reception is determined based on an indication of the indication information. Alternatively, whether a receiving capability on a link is limited when a single spatial stream is used for reception is determined based on an indication of the indication information.

Optionally, after determining the link on which a receiving capability is not limited, the AP MLD may send a broadcast frame or a unicast management frame on the link on which a receiving capability is not limited.

It can be learned that in this embodiment of this application, a non-AP MLD actively reports a link capability of the non-AP MLD. When an AP MLD serves as a TXOP holder, beacon frame transmission between the AP MLD and the EMLSR non-AP MLD can be supported. In addition, when communicating with the EMLSR non-AP MLD, the AP MLD may not send an initial control frame on a link on which a receiving capability is not limited, reducing overheads of some initial control frames.

The foregoing Embodiment 3 describes that the non-AP MLD reports a link capability (or an antenna capability) of the non-AP MLD to the AP MLD in an explicit indication manner. In an optional embodiment, the non-AP MLD may also report the link capability of the non-AP MLD to the AP MLD in an implicit indication manner. Specifically, the AP MLD and the non-AP MLD may consider by default that a link on which an association request frame (Association Request frame) and an association response frame (Association Response frame) are exchanged is a link on which a receiving capability is not limited when the non-AP MLD performs reception by using a single spatial stream (that is, a full receiving capability link). Alternatively, it is specified in a standard that a link on which an association request frame (Association Request frame) and an association response frame (Association Response frame) are exchanged is a link on which a receiving capability is not limited when the non-AP MLD performs reception by using a single spatial stream (that is, a full receiving capability link). In a case in which a reassociation request frame (Reassociation Request frame) and a reassociation response frame (Reassociation Response frame) are exchanged subsequently, if the original link on which the receiving capability is not limited (that is, the original full receiving capability link) does not lose association during reassociation, a link on which a receiving capability is not limited in this case is still the original link on which the receiving capability is not limited (that is, the link on which the association request frame and the association response frame are exchanged). In a case in which the original link on which the receiving capability is not limited loses association during reassociation, a link on which a receiving capability is not limited (that is, a full receiving capability link) becomes a link on which a reassociation request frame and a reassociation response frame are exchanged. Alternatively, if a reassociation request frame and a reassociation response frame are exchanged subsequently, the link on which a receiving capability is not limited when the non-AP MLD performs reception by using a single spatial stream may be directly updated to a link on which the reassociation request frame and the reassociation response frame are exchanged. It should be understood that, if the link on which the association request frame and the association response frame are exchanged and the link on which the reassociation request frame and the reassociation response frame are exchanged are a same link, the link on which a receiving capability is not limited (that is, the full receiving capability link) may not be updated.

It can be learned that, in this embodiment of this application, the non-AP MLD notifies the AP MLD of a link capability (or a supported spatial stream or a supported antenna capability) of the non-AP MLD in an implicit indication manner, reducing signaling overheads.

In another optional embodiment, the AP MLD may further appoint a link on which a receiving capability is not limited (that is, appoint a link as a full receiving capability link). The AP MLD actually does not know a specific link on which a receiving capability is not limited when the non-AP MLD performs reception by using a single spatial stream. After the AP MLD appoints a link, the non-AP MLD needs to switch, based on an indication of the AP MLD, a single spatial stream on which a receiving capability is not limited/a regular antenna to the appointed link. For example, the AP MLD indicates, by using indication information, a link on which a receiving capability is not limited. After receiving the indication information, the non-AP MLD switches a single spatial stream on a receiving capability is not limited/a regular antenna to the link indicated by the indication information.

It can be learned that in this embodiment of this application, the AP MLD directly indicates a link on which a receiving capability is not limited in the non-AP MLD. This facilitates scheduling when the AP MLD communicates with a plurality of EMLSR non-AP MLDs. For example, the AP MLD may appoint a same link as a link on which a receiving capability is not limited for a plurality of EMLSR non-AP MLDs, so that the AP MLD and the plurality of EMLSR non-AP MLDs send a management frame on the same link.

### Embodiment 4

Embodiment 4 of this application mainly describes how an EMLSR non-AP MLD transmits uplink non-trigger-based data, that is, how to independently send uplink data.

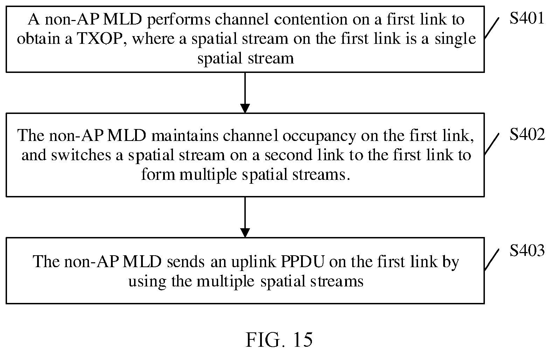

Refer to FIG. 15. FIG. 15 is a schematic flowchart of an uplink non-trigger-based data transmission method in an EMLSR mode according to an embodiment of this application. As shown in FIG. 15, the uplink non-trigger-based data transmission method in the EMLSR mode includes but is not limited to the following steps.

S401: A non-AP MLD performs channel contention on a first link to obtain a TXOP, where a spatial stream on the first link is a single spatial stream.

S402: The non-AP MLD maintains channel occupancy on the first link, and switches a spatial stream on a second link to the first link to form multiple spatial streams.

S403: The non-AP MLD sends an uplink PPDU on the first link by using the multiple spatial streams.

Optionally, in this embodiment of this application, a STA on a link on which a receiving capability is limited is allowed to perform autonomous channel contention, for example, perform enhanced distributed channel access (Enhanced Distributed Channel Access, EDCA). After the STA obtains a channel through contention, if the STA can send a single-stream data frame, the STA sends the single-stream data frame, or switches a receive antenna on another link to a link related to the TXOP, and then sends a multi-stream data frame. If the STA cannot send a single-stream data frame, the STA needs to switch a spatial stream (or an antenna) on another link to a link related to the TXOP to form multiple spatial streams (or multiple antennas), to transmit uplink non-trigger-based data. This embodiment of this application is mainly for a case in which the non-AP MLD needs to switch a spatial stream (or an antenna).

Optionally, the non-AP MLD performs channel contention on the first link by using a single spatial stream (or a single antenna), to obtain a TXOP. If the non-AP MLD cannot send a single-stream data frame on the first link, or the non-AP MLD wants to send a multi-stream data frame, to ensure that the non-AP MLD can send a multi-stream data frame, the non-AP MLD may maintain channel occupancy on the first link, and switch a spatial stream (or an antenna) on the second link to the first link to form multi-stream spatial streams (or multiple antennas). In other words, the non-AP MLD needs to complete spatial stream (antenna) switching before sending an uplink PPDU. Therefore, after completing spatial stream (antenna) switching, the non-AP MLD may send the uplink PPDU on the first link by using the multiple spatial streams (or the multiple antennas). How the non-AP MLD maintains channel occupancy on the first link may be designed according to an actual situation. The following describes several possible manners of maintaining channel occupancy by using examples.

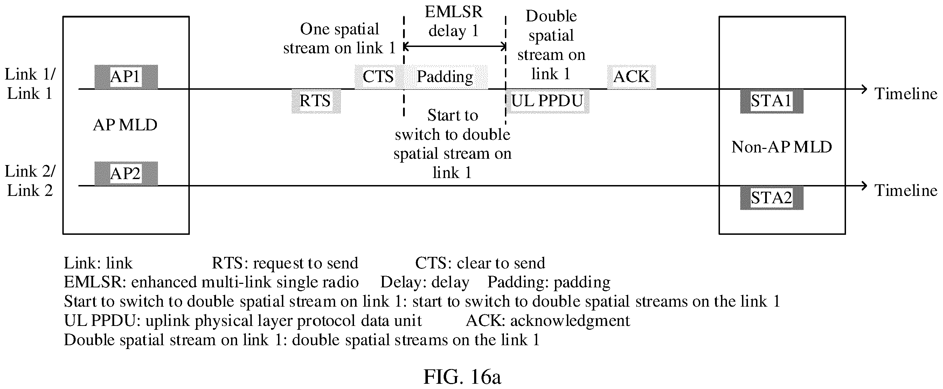

Manner 1: Refer to FIG. 16a. FIG. 16a is a sequence diagram 1 of an uplink non-trigger-based data transmission method according to an embodiment of this application. As shown in FIG. 16a, after preempting a channel on a link 1 (that is, the foregoing first link), a STA1 in a non-AP MLD sends an RTS frame by using a single spatial stream, and starts to switch a spatial stream (or an antenna) after receiving a CTS frame. In this case, an AP1 in an AP MLD needs to pad the CTS frame, so that the non-AP MLD has sufficient time to switch a single spatial stream (or a single antenna) on a link 2 (that is, the foregoing second link) to the link 1 to form dual spatial streams (or dual spatial streams), to support subsequent uplink PPDU transmission by the non-AP MLD on the link 1. An EMLSR delay 1 in FIG. 16a represents a period of time taken to switch a single spatial stream (or a single antenna) on one link to another link to form multiple spatial streams (or multiple antennas). It should be understood that a length of padding (padding) may be determined based on the EMLSR delay 1. The CTS frame needs to be sent by using a PPDU in at least an HT format (including an HT format, a VHT format, an HE format, and an EHT format). Correspondingly, the RTS frame also needs to be sent by using a PPDU in at least an HT format.

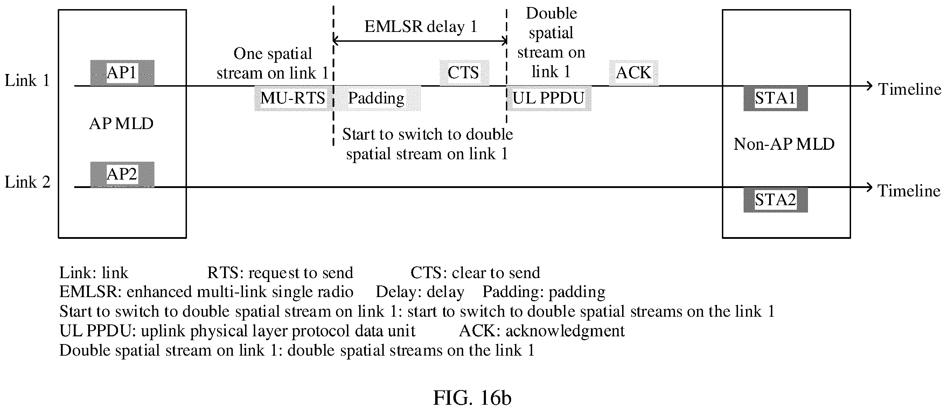

Manner 2: Refer to FIG. 16b. FIG. 16b is a sequence diagram 2 of an uplink non-trigger-based data transmission method according to an embodiment of this application. As shown in FIG. 16b, after preempting a channel on a link 1 (that is, the foregoing first link), a STA1 in a non-AP MLD sends an RTS frame by using a single spatial stream, and then starts to switch a spatial stream (or an antenna), or simultaneously (or concurrently) switches a spatial stream/an antenna when sending an RTS frame (that is, starts to switch a spatial stream/an antenna when sending an RTS frame). In this case, the STA1 in the non-AP MLD needs to pad the RTS frame, so that the non-AP MLD has sufficient time to switch a single spatial stream (or a single antenna) on a link 2 (that is, the foregoing second link) to the link 1 to form multiple spatial streams (or multiple antennas), to support subsequent uplink PPDU transmission by the non-AP MLD on the link 1. An EMLSR delay 1 in FIG. 16b represents a period of time taken to switch a single spatial stream (or a single antenna) on one link to another link to form multiple spatial streams (or multiple antennas). It should be understood that a length of padding (padding) may be determined based on the EMLSR delay 1. The RTS frame needs to be sent by using a PPDU in at least an HT format, or the STA1 sends a multi-user (multi-user, MU) RTS (that is, an MU-RTS) frame, and pads the MU-RTS frame. Optionally, if an AP1 cannot send a CTS frame because the AP1 is performing transmission, the STA1 switches the spatial stream (or the antenna) on the link 1 back to an original antenna configuration, that is, switches back to a single spatial stream (or a single antenna) on the link 1 and the link 2.

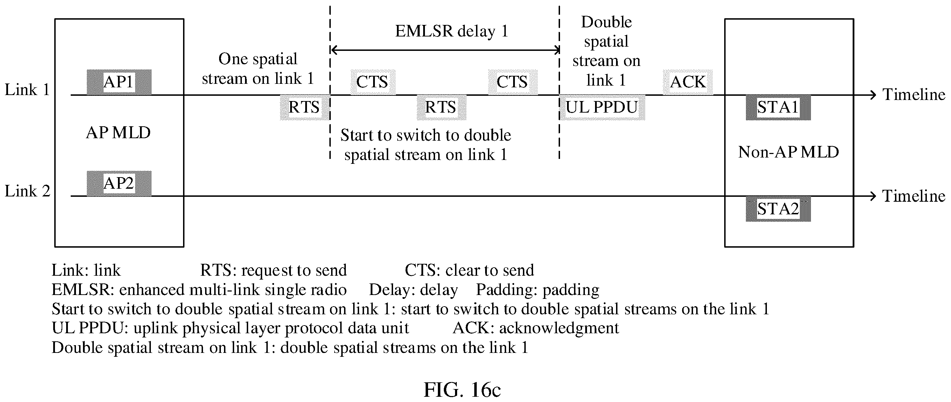

Manner 3: Refer to FIG. 16c. FIG. 16c is a sequence diagram 3 of an uplink non-trigger-based data transmission method according to an embodiment of this application. As shown in FIG. 16c, after preempting a channel on a link 1 (that is, the foregoing first link), a STA1 in a non-AP MLD sends an RTS frame by using a single spatial stream, and then starts to switch a spatial stream (or an antenna), or simultaneously (or concurrently) switches a spatial stream/an antenna when sending an RTS frame (that is, starts to switch a spatial stream/an antenna when sending an RTS frame). After receiving a CTS frame replied by an AP1 in an AP MLD, the STA1 in the non-AP MLD sends another RTS frame, to maintain channel occupancy.

It can be learned that, in this embodiment of this application, a non-AP MLD in an EMLSR mode is allowed to still perform autonomous contention, so that the non-AP MLD in the EMLSR mode is supported to transmit uplink non-trigger-based data.

In an optional embodiment, because a STA on a link on which a receiving capability is limited can only understand (or receive/parse) some PPDUs, allowing the STA to contend actually affects contention in a BSS, likely to incur a collision. Therefore, it may be specified in a standard that, if receiving capabilities of an EMLSR non-AP MLD are asymmetric between links, only a STA on a link on which a receiving capability is not limited can contend for a channel (for example, use EDCA). Alternatively, an AP MLD specifies that a STA on a link may perform channel contention to send uplink non-trigger-based data. It can be learned that, in this embodiment of this application, the non-AP MLD in the EMLSR mode is restricted to perform channel contention only on some links (for example, a link on which a receiving capability is not limited, or some links appointed by the AP MLD) to send uplink non-trigger-based data, reducing collisions in channel contention. The foregoing content describes in detail the methods provided in this application. To facilitate implementation of the foregoing solutions in embodiments of this application, embodiments of this application further provide corresponding apparatuses or devices.

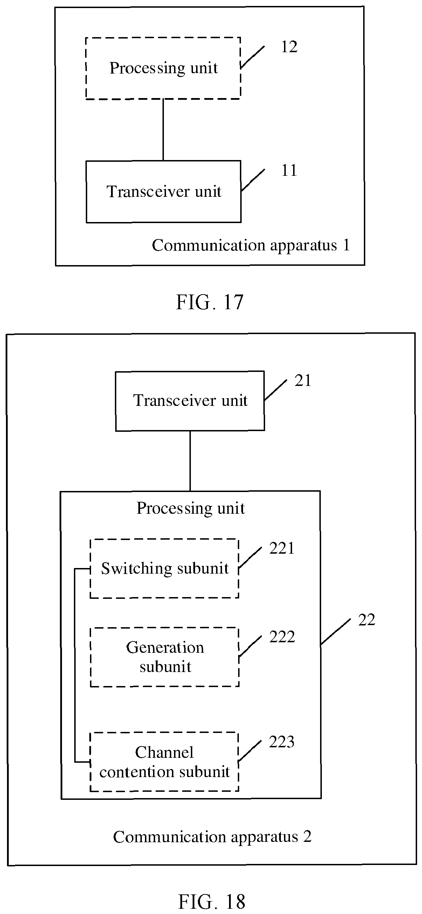

In embodiments of this application, the AP MLD and the non-AP MLD may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation. The following describes in detail communication apparatuses in embodiments of this application with reference to FIG. 17 to FIG. 19. The communication apparatus is an AP MLD or a non-AP MLD. Further, the communication apparatus may be an apparatus in an AP MLD, or the communication apparatus is an apparatus in a non-AP MLD.

When an integrated unit is used, refer to FIG. 17. FIG. 17 is a schematic diagram depicting a structure of a communication apparatus 1 according to an embodiment of this application. The communication apparatus 1 may be an AP MLD or a chip in an AP MLD, for example, a Wi-Fi chip. As shown in FIG. 17, the communication apparatus 1 includes a transceiver unit 11, and optionally includes a processing unit 12.

In a first design, the transceiver unit 11 is configured to send a first frame before a first delay prior to a next TBTT, where the first frame indicates TXOP termination on a first link, and the first delay is used by a non-AP MLD to change a spatial stream on a second link to supporting beacon frame reception. The transceiver unit 11 is further configured to send a beacon frame on the second link at the next TBTT. A first link and a second link exist between the TXOP holder communication apparatus 1 and an EMLSR non-AP MLD, and the communication apparatus 1 is to send a beacon frame on the second link at a next TBTT.

Optionally, the processing unit 12 is configured to generate a first frame and a beacon frame.

Optionally, the transceiver unit 11 is further configured to receive a second frame, where the second frame includes indication information, and the indication information indicates an identifier of a link on which a receiving capability is not limited when the non-AP MLD performs reception by using a single spatial stream.

Optionally, the transceiver unit 11 is further configured to receive a second frame, where the second frame includes indication information, and the indication information is carried in link information of a link, to indicate whether a receiving capability on the link is limited when a single spatial stream is used for reception.

It should be understood that the communication apparatus 1 in the first design may correspondingly perform Embodiment 1, and the foregoing operations or functions of the units in the communication apparatus 1 are respectively used to implement corresponding operations of the AP MLD in Embodiment 1. For brevity, details are not described herein again.

In a second design, the transceiver unit 11 is configured to receive a first frame before a first delay prior to a next TBTT, where the first frame indicates TXOP termination on a first link, and the first delay is used by a non-AP MLD to change a spatial stream on a second link to supporting beacon frame reception. The transceiver unit 11 is further configured to send a beacon frame on the second link at the next TBTT. A first link and a second link exist between the communication apparatus 1 and a TXOP holder non-AP MLD, and the non-AP MLD is in an EMLSR mode.

Optionally, the processing unit 12 is configured to generate a beacon frame.

It should be understood that the communication apparatus 1 in the second design may correspondingly perform Embodiment 2, and the foregoing operations or functions of the units in the communication apparatus 1 are respectively used to implement corresponding operations of the AP MLD in Embodiment 2. For brevity, details are not described herein again.

In a third design, the transceiver unit 11 is configured to receive a MAC frame, where the MAC frame includes indication information, and the indication information indicates an identifier of a link on which a receiving capability is not limited when a non-AP MLD performs reception by using a single spatial stream; or link information of a link in the MAC frame indicates whether a receiving capability on the link is limited when a single spatial stream is used for reception. The processing unit 12 is configured to parse the MAC frame.

It should be understood that the communication apparatus 1 in the third design may correspondingly perform Embodiment 3, and the foregoing operations or functions of the units in the communication apparatus 1 are respectively used to implement corresponding operations of the AP MLD in Embodiment 3. For brevity, details are not described herein again.

Refer to FIG. 18. FIG. 18 is a schematic diagram depicting a structure of a communication apparatus 2 according to an embodiment of this application. The communication apparatus 2 may be a non-AP MLD or a chip in a non-AP MLD, for example, a Wi-Fi chip. As shown in FIG. 18, the communication apparatus 2 includes a transceiver unit 21 and a processing unit 22.

In a first design, the transceiver unit 21 is configured to receive a first frame before a first delay prior to a next TBTT, where the first frame indicates TXOP termination on a first link, and the first delay is used by the non-AP MLD to change a spatial stream on a second link to supporting beacon frame reception. A switching subunit 221 in the processing unit 22 is configured to change, within the first delay after the TXOP termination on the first link, a spatial stream on the second link to supporting beacon frame reception. The transceiver unit 21 is further configured to receive a beacon frame by using a spatial stream currently supported on the second link at the next TBTT. A first link and a second link exist between the communication apparatus 2 and a TXOP holder AP MLD.

Optionally, receiving capabilities are limited when the communication apparatus 2 performs reception on the first link and the second link by using a single spatial stream. A spatial stream supported on the first link within the TXOP is multiple spatial streams, but no spatial stream is supported on the second link of the communication apparatus 2 within the TXOP. The switching subunit 221 is specifically configured to change, within the first delay after the TXOP termination on the first link, from supporting no spatial stream on the second link to supporting multiple spatial streams.

Optionally, the communication apparatus 2 includes a first spatial stream and a second spatial stream. A receiving capability is limited when the communication apparatus 2 performs reception on a link by using the first spatial stream, and a receiving capability is not limited when the communication apparatus 2 performs reception on a link by using the second spatial stream. Optionally, a spatial stream supported on the first link within the TXOP is multiple spatial streams, including a first spatial stream and a second spatial stream. However, no spatial stream is supported on the second link of the communication apparatus 2 within the TXOP. A receiving capability is not limited when the communication apparatus 2 performs reception on the second link by using a single spatial stream. The switching subunit 221 is specifically configured to change, within the first delay after the TXOP termination on the first link, from supporting no spatial stream on the second link to supporting a single spatial stream. The single spatial stream supported on the second link supports beacon frame reception. Herein, the second spatial stream supported on the first link within the TXOP may be switched back to the second link.

In an implementation, the spatial stream supported on the first link within the TXOP is multiple spatial streams, including a first spatial stream and a second spatial stream. However, no spatial stream is supported on the second link of the communication apparatus 2 within the TXOP, and a receiving capability is limited when the communication apparatus 2 performs reception on the second link by using a single spatial stream. The switching subunit 221 is specifically configured to change, within the first delay after the TXOP termination on the first link, from supporting no spatial stream on the second link to supporting a single spatial stream. The single spatial stream supported on the second link supports beacon frame reception. Herein, the second spatial stream supported on the first link may be switched to the second link.

In another implementation, the spatial stream supported on the second link of the communication apparatus 2 within the TXOP is a single spatial stream, but a receiving capability is limited when the communication apparatus 2 performs reception on the second link by using the single spatial stream. The switching subunit 221 is specifically configured to change, within the first delay after the TXOP termination on the first link, the spatial stream supported on the second link from a single spatial stream to multiple spatial streams.

In an implementation, the transceiver unit 21 is further configured to send a second frame, where the second frame includes indication information, and the indication information indicates an identifier of a link on which a receiving capability is not limited when the non-AP MLD performs reception by using a single spatial stream.

In another implementation, the transceiver unit 21 is further configured to send a second frame, where the second frame includes indication information, and the indication information is carried in link information of a link, to indicate whether a receiving capability on the link is limited when a single spatial stream is used for reception.

It should be understood that the communication apparatus 2 in the first design may correspondingly perform Embodiment 1, and the foregoing operations or functions of the units in the communication apparatus 2 are respectively used to implement corresponding operations of the non-AP MLD in Embodiment 1. For brevity, details are not described herein again.

In a second design, the transceiver unit 21 is configured to send a first frame before a first delay prior to a next TBTT, where the first frame indicates TXOP termination on a first link, and the first delay is used by the communication apparatus 2 to change a spatial stream on a second link to supporting beacon frame reception. A switching subunit 221 in the processing unit 22 is configured to change, within the first delay after the TXOP termination on the first link, a spatial stream on the second link to supporting beacon frame reception. The transceiver unit 21 is further configured to receive a beacon frame by using a spatial stream currently supported on the second link at the next TBTT. A first link and a second link exist between the communication apparatus 2 and a TXOP holder AP MLD. The communication apparatus 2 is in an EMLSR mode.

Optionally, receiving capabilities are limited when the communication apparatus 2 performs reception on the first link and the second link by using a single spatial stream. A spatial stream supported on the first link within the TXOP is multiple spatial streams, but no spatial stream is supported on the second link of the communication apparatus 2 within the TXOP. The switching subunit 221 is specifically configured to change, within the first delay after the TXOP termination on the first link, from supporting no spatial stream on the second link to supporting multiple spatial streams.

Optionally, the communication apparatus 2 includes a first spatial stream and a second spatial stream. A receiving capability is limited when the communication apparatus 2 performs reception on a link by using the first spatial stream, and a receiving capability is not limited when the communication apparatus 2 performs reception on a link by using the second spatial stream. Optionally, a spatial stream supported on the first link within the TXOP is multiple spatial streams, including a first spatial stream and a second spatial stream. However, no spatial stream is supported on the second link of the communication apparatus 2 within the TXOP. A receiving capability is not limited when the communication apparatus 2 performs reception on the second link by using a single spatial stream. The switching subunit 221 is specifically configured to change, within the first delay after the TXOP termination on the first link, from supporting no spatial stream on the second link to supporting a single spatial stream. The single spatial stream supported on the second link supports beacon frame reception. Herein, the second spatial stream supported on the first link within the TXOP may be switched back to the second link.

In an implementation, the spatial stream supported on the first link within the TXOP is multiple spatial streams, including a first spatial stream and a second spatial stream. However, no spatial stream is supported on the second link of the communication apparatus 2 within the TXOP, and a receiving capability is limited when the communication apparatus 2 performs reception on the second link by using a single spatial stream. The switching subunit 221 is specifically configured to change, within the first delay after the TXOP termination on the first link, from supporting no spatial stream on the second link to supporting a single spatial stream. The single spatial stream supported on the second link supports beacon frame reception. Herein, the second spatial stream supported on the first link may be switched to the second link.

In another implementation, the spatial stream supported on the second link of the communication apparatus 2 within the TXOP is a single spatial stream, but a receiving capability is limited when the communication apparatus 2 performs reception on the second link by using the single spatial stream. The switching subunit 221 is specifically configured to change, within the first delay after the TXOP termination on the first link, the spatial stream supported on the second link from a single spatial stream to multiple spatial streams.

In an implementation, the transceiver unit 21 is further configured to send a second frame, where the second frame includes indication information, and the indication information indicates an identifier of a link on which a receiving capability is not limited when the non-AP MLD performs reception by using a single spatial stream.

In another implementation, the transceiver unit 21 is further configured to send a second frame, where the second frame includes indication information, and the indication information is carried in link information of a link, to indicate whether a receiving capability on the link is limited when a single spatial stream is used for reception.

It should be understood that the communication apparatus 2 in the second design may correspondingly perform Embodiment 2, and the foregoing operations or functions of the units in the communication apparatus 2 are respectively used to implement corresponding operations of the non-AP MLD in Embodiment 2. For brevity, details are not described herein again.

In a third design, a generation subunit 222 in the processing unit 22 is configured to generate a medium access control MAC frame, where the MAC frame includes indication information, and the indication information indicates an identifier of a link on which a receiving capability is not limited when the non-AP MLD performs reception by using a single spatial stream; or link information of a link in the MAC frame indicates whether a receiving capability on the link is limited when a single spatial stream is used for reception. The transceiver unit is configured to send the MAC frame.

It should be understood that the communication apparatus 2 in the third design may correspondingly perform Embodiment 3, and the foregoing operations or functions of the units in the communication apparatus 2 are respectively used to implement corresponding operations of the non-AP MLD in Embodiment 3. For brevity, details are not described herein again.

In a fourth design, a channel contention subunit 223 in the processing unit 22 is configured to perform channel contention on the first link to obtain a TXOP, and maintain channel occupancy on the first link, where a spatial stream on the first link is a single spatial stream. A switching subunit 221 in the processing unit 22 is configured to switch a spatial stream on the second link to the first link to form multiple spatial streams. The transceiver unit 21 is configured to send an uplink PPDU on the first link by using the multiple spatial streams.

It should be understood that the communication apparatus 2 in the second design may correspondingly perform Embodiment 10, and the foregoing operations or functions of the units in the communication apparatus 2 are respectively used to implement corresponding operations of the non-AP MLD in Embodiment 4. For brevity, details are not described herein again.

The foregoing describes the AP MLD and the non-AP MLD in embodiments of this application. The following describes possible product forms of the AP MLD and the non-AP MLD. It should be understood that a product in any form that has the functions of the AP MLD in FIG. 17 and a product in any form that has the functions of the AP MLD and the non-AP MLD in FIG. 18 fall within the protection scope of embodiments of this application. It should be further understood that the following description is merely an example, and product forms of the AP MLD and the non-AP MLD in embodiments of this application are not limited thereto.

As a possible product form, the AP MLD and the non-AP MLD described in embodiments of this application may be implemented by using a general bus architecture.

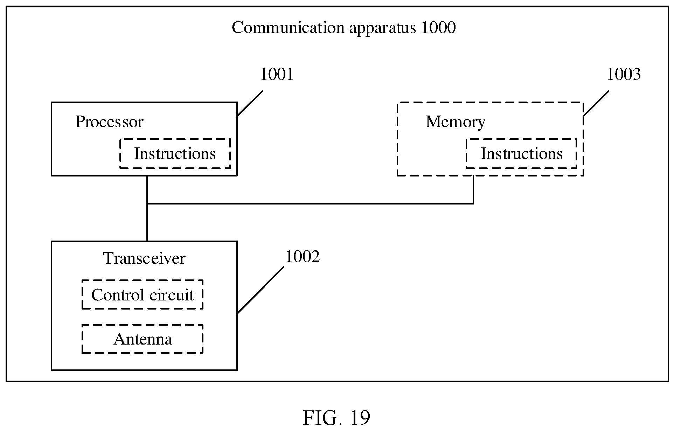

For ease of description, refer to FIG. 19. FIG. 19 is a schematic diagram depicting a structure of a communication apparatus 1000 according to an embodiment of this application. The communication apparatus 1000 may be an AP MLD or a non-AP MLD, or a chip in an AP MLD or a non-AP MLD. FIG. 19 shows only main components of the communication apparatus 1000. In addition to a processor 1001 and a transceiver 1002, the communication apparatus may further include a memory 1003 and an input/output apparatus (not shown in the figure).

The processor 1001 is mainly configured to process a communication protocol and communication data, control the communication apparatus, execute a software program, and process data of the software program. The memory 1003 is mainly configured to store the software program and the data. The transceiver 1002 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process data of the software program. When data needs to be sent wirelessly, the processor 1001 performs baseband processing on the to-be-sent data, and then outputs a baseband signal to a radio frequency circuit. The radio frequency circuit performs radio frequency processing on the baseband signal, and then sends a radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the transceiver 1002, and the memory 1003 may be connected through a communication bus.

In a design, the communication apparatus 1000 may be configured to perform a function of the AP MLD in Embodiment 1. The processor 1001 may be configured to generate the first frame sent in step S101 and the beacon frame sent in step S104 in FIG. 5, and/or configured to perform another process of the technology described in this specification. The transceiver 1002 may be configured to perform steps S101 and S104 in FIG. 5, and/or configured to perform another process of the technology described in this specification.

In another design, the communication apparatus 1000 may be configured to perform a function of the non-AP MLD in Embodiment 1. The processor 1001 may be configured to perform step S103 in FIG. 5, and/or configured to perform another process of the technology described in this specification. The transceiver 1002 may be configured to perform steps S102 and S105 in FIG. 5, and/or configured to perform another process of the technology described in this specification.

In a design, the communication apparatus 1000 may be configured to perform a function of the AP MLD in Embodiment 2. The processor 1001 may be configured to generate the beacon frame sent in step S204 in FIG. 10, and/or configured to perform another process of the technology described in this specification. The transceiver 1002 may be configured to perform steps S202 and S204 in FIG. 10, and/or configured to perform another process of the technology described in this specification.

In another design, the communication apparatus 1000 may be configured to perform a function of the non-AP MLD in Embodiment 2. The processor 1001 may be configured to perform step S203 in FIG. 10, and/or configured to perform another process of the technology described in this specification. The transceiver 1002 may be configured to perform steps S201 and S205 in FIG. 10, and/or configured to perform another process of the technology described in this specification.

In a design, the communication apparatus 1000 may be configured to perform a function of the AP MLD in Embodiment 3. The processor 1001 may be configured to perform step S304 in FIG. 11, and/or configured to perform another process of the technology described in this specification. The transceiver 1002 may be configured to perform step S303 in FIG. 11, and/or configured to perform another process of the technology described in this specification.

In another design, the communication apparatus 1000 may be configured to perform a function of the non-AP MLD in Embodiment 3. The processor 1001 may be configured to perform step S301 in FIG. 11, and/or configured to perform another process of the technology described in this specification. The transceiver 1002 may be configured to perform step S302 in FIG. 11, and/or configured to perform another process of the technology described in this specification.

In a design, the communication apparatus 1000 may be configured to perform a function of the non-AP MLD in Embodiment 4. The processor 1001 may be configured to perform steps S401 and S402 in FIG. 15, and/or configured to perform another process of the technology described in this specification. The transceiver 1002 may be configured to perform step S403 in FIG. 15, and/or configured to perform another process of the technology described in this specification.

In any one of the foregoing designs, the processor 1001 may include a transceiver configured to implement sending and receiving functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus 1000 can perform the method described in any one of the foregoing method embodiments. The computer program may be fixed in the processor 1000. In this case, the processor 1001 may be implemented by hardware.

In an implementation, the communication apparatus 1000 may include a circuit, and the circuit may implement a sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 14. The communication apparatus may be an independent device or may be a part of a large device. For example, the communication apparatus may be:
(1) an independent integrated circuit IC, a chip, or a chip system or subsystem;
(2) a set including one or more ICs, where optionally, the IC set may further include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) another device or the like.

In a possible product form, the AP MLD and the non-AP MLD in embodiments of this application may be implemented by a general processor.

The general-purpose processor for implementing the AP MLD includes a processing circuit and an input/output interface internally connected to and communicating with the processing circuit. In a design, the general-purpose processor may be configured to perform a function of the AP MLD in Embodiment 1. Specifically, the processing circuit may be configured to generate the first frame sent in step S101 and the beacon frame sent in step S104 in FIG. 5, and/or another process of the technology described in this specification. The input/output interface may be configured to perform steps S101 and S104 in FIG. 5, and/or another process of the technology described in this specification.

In another design, the general-purpose processor may be configured to perform a function of the AP MLD in Embodiment 2. Specifically, the processing circuit may be configured to generate the beacon frame sent in step S204 in FIG. 10, and/or another process of the technology described in this specification. The input/output interface may be configured to perform steps S202 and S204 in FIG. 10, and/or another process of the technology described in this specification.

In a design, the general-purpose processor may be configured to perform a function of the AP MLD in Embodiment 3. Specifically, the processing circuit may be configured to perform step S304 in FIG. 11, and/or another process of the technology described in this specification. The input/output interface may be configured to perform step S303 in FIG. 11, and/or another process of the technology described in this specification.

The general-purpose processor for implementing the non-AP MLD includes a processing circuit and an input/output interface internally connected to and communicating with the processing circuit.

In a design, the general-purpose processor may be configured to perform a function of the non-AP MLD in Embodiment 1. Specifically, the processing circuit may be configured to perform step S103 in FIG. 5, and/or another process of the technology described in this specification. The input/output interface may be configured to perform steps S102 and S105 in FIG. 5, and/or another process of the technology described in this specification.

In a design, the general-purpose processor may be configured to perform a function of the non-AP MLD in Embodiment 2. Specifically, the processing circuit may be configured to perform step S203 in FIG. 10, and/or another process of the technology described in this specification. The input/output interface may be configured to perform steps S201 and S205 in FIG. 10, and/or another process of the technology described in this specification.

In a design, the general-purpose processor may be configured to perform a function of the non-AP MLD in Embodiment 3. Specifically, the processing circuit may be configured to perform step S301 in FIG. 11, and/or another process of the technology described in this specification. The input/output interface may be configured to perform step S302 in FIG. 11, and/or another process of the technology described in this specification.

In a design, the general-purpose processor may be configured to perform a function of the non-AP MLD in Embodiment 4. Specifically, the processing circuit may be configured to perform steps S401 and S402 in FIG. 15, and/or another process of the technology described in this specification. The input/output interface may be configured to perform step S403 in FIG. 15, and/or another process of the technology described in this specification.

It should be understood that the communication apparatuses in the foregoing various product forms have any function of the AP MLD or the non-AP MLD in the method embodiments. Details are not described herein again.

An embodiment of this application further provides a computer-readable storage medium. The computer-readable storage medium stores computer program code. When the processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a wireless communication system, including an AP MLD and a non-AP MLD. The AP MLD and the non-AP MLD may perform the method in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose or a special-purpose computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. Abeacon frame transmission method in an enhanced multi-link single radio EMLSR mode, wherein
a first link and a second link exist between a transmission opportunity TXOP holder access point multi-link device AP MLD and an enhanced multi-link single radio EMLSR non-access point multi-link device non-AP MLD, and the AP MLD is to send a beacon frame on the second link at a next target beacon transmission time TBTT, and the method comprises:
sending, by the AP MLD, a first frame before a first delay prior to a next TBTT, wherein the first frame indicates TXOP termination on the first link, and the first delay is used by the non-AP MLD to change a spatial stream on the second link to supporting beacon frame reception; and
sending, by the AP MLD, a beacon frame on the second link at the next TBTT.

2. A beacon frame transmission method in an EMLSR mode, wherein
a first link and a second link exist between an EMLSR non-AP MLD and a TXOP holder AP MLD, and the method comprises:
receiving, by the non-AP MLD, a first frame before a first delay prior to a next TBTT, wherein the first frame indicates TXOP termination on the first link, and the first delay is used by the non-AP MLD to change a spatial stream on the second link to supporting beacon frame reception;
changing, by the non-AP MLD within the first delay after the TXOP termination on the first link, the spatial stream on the second link to supporting beacon frame reception; and
receiving, by the non-AP MLD, a beacon frame by using a spatial stream supported on the second link at the next TBTT.

3. The method according to claim 1 or 2, wherein the first delay is one of the following: the first delay is a period of time taken by the non-AP MLD to change a spatial stream supported on the second link from a single spatial stream to multiple spatial streams; or
the first delay is a period of time taken by the non-AP MLD to change from supporting no spatial stream on the second link to supporting a single spatial stream or multiple spatial streams.

4. The method according to claim 2 or 3, wherein a receiving capability is limited when the non-AP MLD performs reception on the second link by using a single spatial stream, and no spatial stream is supported on the second link of the non-AP MLD within the TXOP; and
the changing, by the non-AP MLD within the first delay after the TXOP termination on the first link, the spatial stream on the second link to supporting beacon frame reception comprises:
changing, by the non-AP MLD within the first delay after the TXOP termination on the first link, from supporting no spatial stream on the second link to supporting multiple spatial streams.

5. The method according to claim 2 or 3, wherein no spatial stream is supported on the second link of the non-AP MLD within the TXOP; and
the changing, by the non-AP MLD within the first delay after the TXOP termination on the first link, the spatial stream on the second link to supporting beacon frame reception comprises:
changing, by the non-AP MLD within the first delay after the TXOP termination on the first link, from supporting no spatial stream on the second link to supporting a single spatial stream, wherein
the single spatial stream supported on the second link supports beacon frame reception.

6. The method according to claim 2 or 3, wherein a receiving capability is limited when the non-AP MLD performs reception on the second link by using a single spatial stream, and a spatial stream supported on the second link of the non-AP MLD within the TXOP is a single spatial stream; and
the changing, by the non-AP MLD within the first delay after the TXOP termination on the first link, the spatial stream on the second link to supporting beacon frame reception comprises:
changing, by the non-AP MLD within the first delay after the TXOP termination on the first link, the spatial stream supported on the second link from a single spatial stream to multiple spatial streams.

7. The method according to any one of claims 1 to 6, wherein
a link on which a receiving capability is not limited when the non-AP MLD performs reception by using a single spatial stream is: a link on which an association request frame and an association response frame are exchanged between the AP MLD and the non-AP MLD in an association process, or a link on which a reassociation request frame and a reassociation response frame are exchanged between the AP MLD and the non-AP MLD in a reassociation process.

8. The method according to any one of claims 2 to 6, wherein the method further comprises:
sending, by the non-AP MLD, a second frame, wherein the second frame comprises indication information, and the indication information indicates an identifier of a link on which a receiving capability is not limited when the non-AP MLD performs reception by using a single spatial stream.

9. The method according to claim 1 or 3, wherein the method further comprises:
receiving, by the AP MLD, a second frame, wherein the second frame comprises indication information, and the indication information indicates an identifier of a link on which a receiving capability is not limited when the non-AP MLD performs reception by using a single spatial stream.

10. The method according to claim 8 or 9, wherein the indication information is located in a common information field of a multi-link element of the second frame, and a length of the indication information is 4 bits.

11. The method according to claim 10, wherein the indication information is located in an enhanced multi-link EML capabilities field of the common information field.

12. The method according to any one of claims 2 to 6, wherein the method further comprises:
sending, by the non-AP MLD, a second frame, wherein the second frame comprises indication information, and the indication information is carried in link information of a link, to indicate whether a receiving capability on the link is limited when a single spatial stream is used for reception.

13. The method according to claim 1 or 3, wherein the method further comprises:
receiving, by the AP MLD, a second frame, wherein the second frame comprises indication information, and the indication information is carried in link information of a link, to indicate whether a receiving capability on the link is limited when a single spatial stream is used for reception.

14. The method according to claim 12 or 13, wherein the indication information is located in an extremely high throughput EHT medium access control MAC capabilities information field of the second frame, and a length of the indication information is 1 bit.

15. The method according to claim 12 or 13, wherein the indication information is located in a per-station STA profile of a multi-link element of the second frame, and a length of the indication information is 1 bit.

16. The method according to claim 15, wherein the indication information is located in a STA control field of the per-STA profile.

17. A beacon frame transmission method in an EMLSR mode, wherein
a first link and a second link exist between a TXOP holder non-AP MLD and an AP MLD, and the non-AP MLD is in an EMLSR mode; and the method comprises:
sending, by the non-AP MLD, a first frame before a first delay prior to a next TBTT, wherein the first frame indicates TXOP termination on the first link, and the first delay is used by the non-AP MLD to change a spatial stream on the second link to supporting beacon frame reception;
changing, by the non-AP MLD within the first delay after the TXOP termination on the first link, the spatial stream on the second link to supporting beacon frame reception; and
receiving, by the non-AP MLD, a beacon frame by using a spatial stream supported on the second link at the next TBTT.

18. A beacon frame transmission method in an EMLSR mode, wherein
a first link and a second link exist between an AP MLD and a TXOP holder non-AP MLD, and the non-AP MLD is in an EMLSR mode; and the method comprises:
receiving, by the AP MLD, a first frame before a first delay prior to a next TBTT, wherein the first frame indicates TXOP termination on the first link, and the first delay is used by the non-AP MLD to change a spatial stream on the second link to supporting beacon frame reception; and
sending, by the AP MLD, a beacon frame on the second link at the next TBTT.

19. The method according to claim 17 or 18, wherein the first delay is one of the following:
the first delay is a period of time taken by the non-AP MLD to change a spatial stream supported on the second link from a single spatial stream to multiple spatial streams; or
the first delay is a period of time taken by the non-AP MLD to change from supporting no spatial stream on the second link to supporting a single spatial stream or multiple spatial streams.

20. The method according to claim 18 or 19, wherein a receiving capability is limited when the non-AP MLD performs reception on the second link by using a single spatial stream, and no spatial stream is supported on the second link of the non-AP MLD within the TXOP; and
the changing, by the non-AP MLD within the first delay after the TXOP termination on the first link, the spatial stream on the second link to supporting beacon frame reception comprises:
changing, by the non-AP MLD within the first delay after the TXOP termination on the first link, from supporting no spatial stream on the second link to supporting multiple spatial streams.

21. The method according to claim 18 or 19, wherein no spatial stream is supported on the second link of the non-AP MLD within the TXOP; and
the changing, by the non-AP MLD within the first delay after the TXOP termination on the first link, the spatial stream on the second link to supporting beacon frame reception comprises:
changing, by the non-AP MLD within the first delay after the TXOP termination on the first link, from supporting no spatial stream on the second link to supporting a single spatial stream, wherein
the single spatial stream supported on the second link supports beacon frame reception.

22. The method according to claim 18 or 19, wherein a receiving capability is limited when the non-AP MLD performs reception on the second link by using a single spatial stream, and a spatial stream supported on the second link of the non-AP MLD within the TXOP is a single spatial stream; and
the changing, by the non-AP MLD within the first delay after the TXOP termination on the first link, the spatial stream on the second link to supporting beacon frame reception comprises:
changing, by the non-AP MLD within the first delay after the TXOP termination on the first link, the spatial stream supported on the second link from a single spatial stream to multiple spatial streams.

23. The method according to any one of claims 17 to 22, wherein
a link on which a receiving capability is not limited when the non-AP MLD performs reception by using a single spatial stream is: a link on which an association request frame and an association response frame are exchanged between the AP MLD and the non-AP MLD in an association process, or a link on which a reassociation request frame and a reassociation response frame are exchanged between the AP MLD and the non-AP MLD in a reassociation process.

24. A beacon frame transmission method in an EMLSR mode, wherein
a first link exists between an EMLSR non-AP MLD and a TXOP holder AP MLD, and the method comprises:
receiving, by the non-AP MLD, a first frame prior to a next TBTT, wherein the first frame indicates TXOP termination on the first link; and
maintaining, by the non-AP MLD, a spatial stream supported on the first link, and receiving a beacon frame by using the spatial stream supported on the first link at the next TBTT.

25. The method according to claim 24, wherein the spatial stream supported on the first link is a single spatial stream or multiple spatial streams.

26. A communication apparatus, comprising a unit or a module configured to perform the method according to any one of claims 1 to 25.

27. A communication apparatus, comprising a processor and a transceiver, wherein the transceiver is configured to send and receive a frame, and the processor is configured to execute program instructions, to enable the communication apparatus to perform the method according to any one of claims 1 to 25.

28. A computer-readable storage medium, wherein the computer-readable storage medium stores program instructions, and when the program instructions are run on a computer, the computer is enabled to perform the method according to any one of claims 1 to 25.

29. A computer program product comprising program instructions, wherein when the program instructions are run on a computer, the computer is enabled to perform the method according to any one of claims 1 to 25.

30. A communication apparatus, comprising a processor and an interface circuit, wherein
the interface circuit is configured to receive code instructions and transmit the code instructions to the processor; and
the processor is configured to run the code instructions to perform the method according to any one of claims 1 to 25.
